# EUROPEAN PATENT APPLICATION

(11) **EP 4 675 820 A1**
(43) Date of publication of application: **07.01.2026**
(21) Application number: 23932789.3
(22) Date of filing: 17.11.2023
(51) Int. Cl.: H01M 50/40

(54) **BATTERY CELL, BATTERY AND ELECTRIC DEVICE**

(30) Priority: 13.04.2023 CN 202310392850
(71) Applicant: Contemporary Amperex Technology Co., Limited, Ningde, Fujian 352100 (CN)
(72) Inventor: XIAO, Dejun, Ningde, Fujian 352100 (CN); HE, Jianfu, Ningde, Fujian 352100 (CN); LIN, Chenhui, Ningde, Fujian 352100 (CN); WANG, Shaoshan, Ningde, Fujian 352100 (CN); YE, Yonghuang, Ningde, Fujian 352100 (CN)
(74) Representative: Ran, Handong
(86) International application number: PCT/CN2023/132457
(87) International publication number: WO 2024/212518

(57) **Abstract**

Disclosed in the present application are a battery cell, a battery and an electric device. The battery cell comprises a case, an insulating member and an electrode assembly, wherein the case is configured to be provided with a mounting cavity; the insulating member and the electrode assembly are both located in the mounting cavity; the insulating member comprises an insulator and a first buffer, which are connected to each other; the insulator covers the exterior of the electrode assembly; the electrode assembly comprises a main body portion, and a bending portion connected to an end of the main body portion; and the first buffer is located between the bending portion and the case. The first buffer can relieve an expansion force of the bending portion, thereby reducing the risk of an excessively large spacing occurring between a negative electrode sheet and a positive electrode sheet, reducing the risk of an electrolyte bridge cutoff, alleviating the phenomenon of lithium plating of the bending portion, improving the cycling performance of the battery cell, and prolonging the service life of the battery.

## Description

This application claims priority to Chinese Patent Application No. 202310392850.X, filed with the China National Intellectual Property Administration on April 13, 2023 and entitled "BATTERY CELL, BATTERY AND ELECTRIC DEVICE", which is incorporated herein by reference with its entirety.

### TECHNICAL FIELD

This application relates to the technical field of battery swelling, and in particular, to a battery cell, a battery, and an electric apparatus.

### BACKGROUND

Energy conservation and emission reduction are key to the sustainable development of the automotive industry. Electric vehicles, due to their advantages of energy conservation and environmental friendliness, have become an important component of the sustainable development of the automotive industry. For electric vehicles, battery technology is a critical factor in connection with their development.

During the use of a battery, as the battery undergoes charge-discharge cycles, an electrode assembly within the battery is prone to lithium precipitation, which affects the service life of the battery.

The above statements are provided solely to offer background information related to this application and do not necessarily constitute the prior art.

### SUMMARY

An objective of embodiments of this application is to provide a battery cell, a battery, and an electric apparatus, including but not limited to mitigating the lithium precipitation that readily occurs in an electrode assembly within the battery.

The technical solutions adopted by the embodiments of this application are as follows.

According to a first aspect, a battery cell is provided. The battery cell includes a housing, an insulating member, and an electrode assembly. The housing is provided with a mounting cavity, and the insulating member and the electrode assembly are both located in the mounting cavity. The insulating member includes an insulator and a first buffer body connected to each other. The insulator wraps the exterior of the electrode assembly. The electrode assembly includes a body portion and a bent portion connected to an end portion of the body portion, and the first buffer body is located between the bent portion and the housing.

In the battery cell of this embodiment of this application, the battery cell includes a housing, an electrode assembly, and an insulating member, where the electrode assembly and the insulating member are both located in the mounting cavity of the housing. The insulating member includes an insulator and a first buffer body connected to each other, where the insulator wraps the exterior of the electrode assembly to achieve insulation between the electrode assembly and the housing. The first buffer body is located between the bent portion of the electrode assembly and the housing. Thus, when the bent portion swells, the bent portion swells toward the housing, the bent portion compresses the first buffer body, and the first buffer body undergoes elastic deformation. The elastic deformation of the first buffer body can buffer the swelling of the bent portion of the electrode assembly, mitigating the swelling force of the bent portion of the electrode assembly, reducing the risk of excessive spacing between a negative electrode plate and a positive electrode plate, reducing the risk of electrolyte bridge breakage, alleviating the lithium precipitation at the bent portion, improving the cycling performance of the battery cell, and extending the service life of the battery.

In one embodiment, the first buffer body is located between a surface of the bent portion facing away from the body portion and the housing.

In the battery cell of this embodiment of this application, the surface of the bent portion facing away from the body portion exhibits significant swelling compared to other portions of the bent portion, and the first buffer body can mitigate the swelling force at a significant swelling position of the bent portion, greatly reducing the risks of bridge breakage and lithium precipitation.

In one embodiment, the insulator includes a side surface region, and the side surface region covers the surface of the bent portion facing away from the body portion.

In the battery cell of this embodiment of this application, the side surface region is located between the surface of the bent portion facing away from the body portion and the housing. The side surface region can achieve insulation between the surface of the bent portion facing away from the body portion and the housing, reducing the risk of short circuits and improving the use reliability of the battery cell.

In one embodiment, at least one of a surface of the side surface region facing the electrode assembly and a surface of the side surface region facing away from the electrode assembly is connected to the first buffer body.

In the battery cell of this embodiment of this application, the surface of the bent portion facing away from the body portion swells and compresses the first buffer body, causing elastic deformation, thereby mitigating the swelling force of the surface of the bent portion facing away from the body portion.

In one embodiment, the insulating member is provided with a first through hole extending through the side surface region and the first buffer body, where the first through hole can allow an electrolyte to pass and flow to the bent portion of the electrode assembly.

In the battery cell of this embodiment of this application, the electrolyte outside the insulating member can flow to the bent portion through the first through hole, realizing electrolyte replenishment for the bent portion, thereby helping to improve the cycling performance of the battery cell.

In one embodiment, the number of the first through holes is N₁, a cross-sectional area of the first through hole is S₁, a projection area of the first buffer body along a thickness direction of the first buffer body is S₂, and N₁*S₁≤0.1S₂.

In the battery cell of this embodiment of this application, through the design of N₁*S₁≤0.1S₂, the first through hole occupies a small region of the first buffer body, meaning the first buffer body has a small hollow region, enabling the first buffer body to provide a good buffering effect for the electrode assembly and improving the cycling performance of the battery cell.

In one embodiment, the first buffer body is provided with a receiving groove for accommodating the bent portion, and a wall of the receiving groove is capable of being attached to the surface of the bent portion facing away from the body portion.

In the battery cell of this embodiment of this application, when the bent portion swells, the surface of the bent portion facing away from the body portion can be attached to the wall of the receiving groove and compress the wall of the receiving groove, causing elastic deformation. Thus, the first buffer body can mitigate the swelling force across the entire surface of the bent portion facing away from the body portion, helping to reduce the risk of lithium precipitation at the bent portion.

In one embodiment, when the first buffer body is not under pressure, a thickness at the thinnest part of the first buffer body is H₁, a width of the bent portion is E₁, and 0.05 mm≤H₁≤0.6E₁.

In the battery cell of this embodiment of this application, through the design of 0.05 mm≤H₁≤0.6E₁, the first buffer body has a specific thickness at its thinnest part, which can mitigate the swelling of the bent portion, improving the cycling performance of the battery cell. Additionally, the thickness at the thinnest part of the first buffer body is not excessively large in design, which reduces material usage, reduces costs, and reduces the space occupied by the first buffer body in the mounting cavity, thereby increasing the energy density of the battery cell.

In one embodiment, 0.05 mm≤H₁≤0.3E₁.

In the battery cell of this embodiment of this application, through the design of 0.05 mm≤H₁≤0.3E₁, while buffering performance requirements are satisfied, the thickness at the thinnest part of the first buffer body can be designed to be small based on electrode assemblies of different sizes, further reducing material usage, reducing costs, and further reducing the space occupied by the first buffer body in the mounting cavity, thereby further increasing the energy density of the battery cell.

In one embodiment, when the first buffer body is under pressure, the thickness at the thinnest part of the first buffer body is H₂, the width of the bent portion is E₁, and 0.005 mm≤H₂≤0.2E₁.

In the battery cell of this embodiment of this application, through the design of 0.005 mm≤H₂≤0.2E₁, after the first buffer body is compressed, the thickness at the thinnest part of the first buffer body is reasonably designed, indicating that the first buffer body effectively mitigates the swelling force of the bent portion. This can also reduce material usage, reduce costs, and reduce the space occupied by the first buffer body in the mounting cavity, thereby increasing the energy density of the battery cell.

In one embodiment, 0.005 mm≤H₂≤0.1E₁.

In the battery cell of this embodiment of this application, through the design of 0.005 mm≤H₂≤0.1E₁, the thickness at the thinnest part of the first buffer body can be designed to be small based on electrode assemblies of different sizes, further reducing material usage, reducing costs, and further reducing the space occupied by the first buffer body in the mounting cavity, thereby further increasing the energy density of the battery cell.

In one embodiment, the body portion includes a large surface connected to the surface of the bent portion facing away from the body portion, the insulator further includes a large surface region, the large surface region covers the large surface, and a thickness of the body portion is H₃. When the large surface region is not under pressure, a thickness of the insulating member at the large surface region is H₄, and 0.04 mm≤H₄≤0.2H₃; and/or, when the large surface region is under pressure, the thickness of the insulating member at the large surface region is H₅, and 0.004 mm≤H₅≤0.1H₃.

In the battery cell of this embodiment of this application, through the above design, the thickness of the insulating member at the large surface region is reasonably designed, enabling insulation between the large surface and the housing, and also helping to reduce material usage and reduce manufacturing costs. Moreover, a portion of the insulating member at the large surface region is prevented from occupy excessive space in the mounting cavity, helping to increase the energy density of the battery cell.

In one embodiment, the insulator includes a bottom surface region, two large surface regions, and two side surface regions, both ends of the body portion are connected to the bent portions, the body portion includes large surfaces respectively connected to two opposite sides of the surfaces of the bent portions facing away from the body portion, the two large surface regions respectively cover the two large surfaces, the two side surface regions respectively cover the surfaces of the two bent portions facing away from the body portion, and the bottom surface region covers a surface of the body portion facing away from a tab of the electrode assembly and a surface of the bent portion facing away from the tab of the electrode assembly.

In the battery cell of this embodiment of this application, the arrangement of the bottom surface region, the two large surface regions, and the two side surface regions can insulate most regions of the electrode assembly from the housing, reducing the risk of short circuits and improving the use reliability of the battery cell.

In one embodiment, a length of the bottom surface region is L₁, a width of the electrode assembly is E₂, a thickness of the first buffer body is H₆, a thickness of the side surface region is H₇, and E₂≤L₁≤1.05*(E₂+2H₇+2H₆).

In the battery cell of this embodiment of this application, through the design of E₂≤L₁≤1.05*(E₂+2H₇+2H₆), there is a certain space between the two side surface regions to accommodate the electrode assembly, reducing the risk of overpressure on the electrode assembly. Additionally, a spacing between the two side surface regions may be slightly larger than the width of the electrode assembly, allowing the two side surface regions to support the two bent portions, thereby enabling the electrode assembly to be stably wrapped within the insulating member. Furthermore, the first buffer body has sufficient mounting space, reducing the risk of overpressure on the first buffer body, and allowing the first buffer body to effectively mitigate the swelling of the bent portion.

In one embodiment, the number of the electrode assemblies within the insulator is N₂, a thickness of the body portion is H₃, a width of the bottom surface region is E₃, a thickness of the large surface region is H₈, and N₂*H₃≤E₃≤1.05N₂*(H₃+2H₈).

In the battery cell of this embodiment of this application, through the design of E₂≤L₁≤1.05*(E₂+2H₇+2H₆), there is a certain space between the two large surface regions to accommodate all the electrode assemblies, and this space may be designed to be sufficiently large, reducing the risk of overpressure on the electrode assemblies. Additionally, a spacing between the two large surface regions may be designed to be slightly larger than a total thickness of all the body portions, allowing the large surface regions to support the body portions, thereby enabling the electrode assemblies to be stably wrapped within the insulating member.

In one embodiment, the housing includes a shell and an end cover, the end cover covers the shell, and the end cover and the shell jointly enclose the mounting cavity. The number of the electrode assemblies within the insulator is N₂, the insulator further includes a first top surface portion, the first top surface portion is connected to the end cover, the first top surface portion is located at a side portion of the large surface region facing away from the bottom surface region, a width of the first top surface portion is E₄, a thickness of the body portion is H₃, and 0.1N₂*H₃≤E₄≤0.5N₂*H₃.

In the battery cell of this embodiment of this application, through the design of 0.1N₂*H₃≤E₄≤0.5N₂*H₃, the first top surface portion has a specific area in connection with the end cover, allowing the end cover and the first top surface portion to be firmly connected, and enabling the insulating member to be stably fixed within the housing, thereby improving the cycling stability and use reliability of the battery cell. In addition, the width of the first top surface portion is less than or equal to half the total thickness of all the body portions, ensuring that the two first top surface portions respectively located on two opposite sides of the electrode assembly do not overlap when covering the electrode assembly, reducing redundancy and also reducing the risk of shielding the tab.

In one embodiment, 0.1N₂*H₃≤E₄≤0.25N₂*H₃.

In the battery cell of this embodiment of this application, through the design of 0.1N₂*H₃≤E₄≤0.5N₂*H₃, the end cover and the first top surface portion are firmly connected, enabling the insulating member to be stably fixed within the housing, improving the cycling stability and use reliability of the battery cell. In addition, the width of the first top surface portion is less than or equal to a quarter of the total thickness of all the body portions, so that the width of the first top surface portion may be designed to be smaller, reducing material usage and reducing costs.

In one embodiment, at least one of the bottom surface region, the side surface region, and the large surface region is covered with a functional layer for improving the performance of the battery cell.

In the battery cell of this embodiment of this application, the functional layer can improve the performance of the battery cell.

In one embodiment, the functional layer includes a thermally conductive layer, where the thermally conductive layer covers the bottom surface region; and/or the thermally conductive layer covers the large surface region.

In the battery cell of this embodiment of this application, the thermally conductive layer covering the bottom surface region can improve heat dissipation at the bottom of the electrode assembly, reducing the risk of thermal runaway of the battery cell. The thermally conductive layer covering the large surface region can accelerate heat conduction between two adjacent battery cells, reducing the temperature difference between the two adjacent battery cells, thereby helping to improve the temperature consistency of grouped battery cells, facilitating system thermal management of the battery cells, and extending the service life of the battery cells.

In one embodiment, the functional layer further includes a thermal insulation layer, where the thermal insulation layer covers the large surface region.

In the battery cell of this embodiment of this application, the thermal insulation layer can impede outward transfer of heat generated by the electrode assembly, thereby helping to control the spread of heat after a single battery cell undergoes thermal runaway, reducing the risk of thermal runaway in other battery cells caused by the thermal runaway of this single battery cell, and improving the use reliability of grouped battery cells.

In one embodiment, the insulating member further includes a second buffer body, there are a plurality of electrode assemblies, the plurality of electrode assemblies are stacked along the thickness direction of the body portion to form an electrode module, the insulator wraps the exterior of the electrode module, and the second buffer body is disposed between two adjacent electrode assemblies.

In the battery cell of this embodiment of this application, the second buffer body can mitigate swelling of two adjacent electrode assemblies, reducing the risk of lithium precipitation in the electrode assemblies.

In one embodiment, at least one edge portion of the second buffer body is connected to the insulator.

In the battery cell of this embodiment of this application, the edge portion of the second buffer body is connected to the insulator, so that the insulating member is simple in structure and easy to process and manufacture.

In one embodiment, a plurality of second buffer bodies are disposed between two adjacent electrode assemblies, and the plurality of second buffer bodies are stacked along the thickness direction of the body portion.

In the battery cell of this embodiment of this application, the plurality of second buffer bodies can buffer the swelling of two adjacent electrode assemblies, providing a better effect in mitigating the swelling of the electrode assemblies, thereby helping to reduce the risk of lithium precipitation in the electrode assemblies.

In one embodiment, the second buffer bodies are sequentially connected in a manner that the plurality of stacked second buffer bodies can be unfolded; the insulator includes a first insulating portion and a second insulating portion; the first insulating portion and the second insulating portion respectively cover two adjacent electrode assemblies; and when the plurality of second buffer bodies are in an unfolded state, the first second buffer body is connected to the first insulating portion, the last second buffer body is connected to the second insulating portion, and the first insulating portion and the second insulating portion can leave away from each other as the second buffer bodies are unfolded.

In the battery cell of this embodiment of this application, the plurality of stacked second buffer bodies can be unfolded, facilitating the accommodation and storage of the insulating member.

In one embodiment, the insulator includes a plurality of third insulating portions located between two adjacent electrode assemblies, the plurality of third insulating portions are stacked along the thickness direction of the body portion, the third insulating portions are sequentially connected in a manner that the plurality of stacked third insulating portions can be unfolded, and at least one third insulating portion is connected to the second buffer body.

In the battery cell of this embodiment of this application, the third insulating portions can insulate two adjacent electrode assemblies, reducing the risk of short circuits. Additionally, the unfolding of the plurality of stacked third insulating portions drives the second buffer body connected to the third insulating portions to be flattened accordingly, achieving the unfolding of the insulating member, thereby facilitating the accommodation and storage of the insulating member.

In one embodiment, when there is a pressure P along the thickness direction of the first buffer body, a thickness deformation amount of the first buffer body is a, a thickness of the first buffer body before the pressure is applied is b, and c=a/b, where when 0.001 MPa≤P≤0.05 MPa, 0.5%≤c≤60%; and when P≥1.2 MPa, c≥80%.

In the battery cell of this embodiment of this application, by defining the relationship between the pressure applied to the first buffer body and the deformation amount, the first buffer body can match the swelling of the electrode assembly throughout the lifecycle of the electrode assembly, effectively mitigating the swelling of the electrode assembly, alleviating lithium precipitation in the electrode assembly, and improving the cycling performance of the electrode assembly.

In one embodiment, the first buffer body and the insulator form an integrated structure; or the first buffer body is bonded to the insulator; or the first buffer body is connected to the insulator by hot pressing.

In the battery cell of this embodiment of this application, by adopting the above technical solution, the insulating member is each to process and manufacture.

According to a second aspect, a battery is provided, including the battery cell described above.

In the battery of this embodiment of this application, the battery cell described above is used, and the battery cell has high use reliability and long cycle life, helping to extend the service life of the battery and improve the performance of the battery.

According to a third aspect, an electric apparatus is provided, including the battery described above.

In the electric apparatus of this embodiment of this application, the battery described above is used, and the battery has a long service life, helping to improve the performance of the electric apparatus.

### BRIEF DESCRIPTION OF DRAWINGS

To more clearly illustrate the technical solutions in the embodiments of this application, the drawings required for describing the embodiments or the prior art are briefly introduced below. It is apparent that the drawings described below are merely some embodiments of this application, and those skilled in the art can obtain other drawings based on these drawings without creative effort.
FIG. 1 is a schematic structural diagram of a vehicle according to an embodiment of this application.
FIG. 2 is a schematic exploded view of a battery according to an embodiment of this application.
FIG. 3 is a schematic exploded view of a battery cell according to an embodiment of this application.
FIG. 4 is a schematic structural diagram of an electrode assembly of a battery cell according to an embodiment of this application.
FIG. 5 is a schematic structural diagram of an insulating member in a folded state according to an embodiment of this application.
FIG. 6 is a schematic structural diagram of an insulating member in an unfolded state from one perspective according to an embodiment of this application.
FIG. 7 is a schematic structural diagram of the insulating member in the unfolded state shown in FIG. 6 from another perspective.
FIG. 8 is a cross-sectional view along line A-A in FIG. 7.
FIG. 9 is a partially enlarged view of location B in FIG. 8.
FIG. 10 is a schematic structural diagram of an insulating member in an unfolded state from one perspective according to an embodiment of this application.
FIG. 11 is a schematic structural diagram of the insulating member in the unfolded state shown in FIG. 10 from another perspective.
FIG. 12 is a schematic structural diagram of an insulating member which wraps the exterior of an electrode assembly in a folded manner according to an embodiment of this application.
FIG. 13 is a schematic cross-sectional view of the insulating member which wraps the exterior of the electrode assembly in a folded manner shown in FIG. 12.
FIG. 14 is a schematic structural diagram of the insulating member shown in FIG. 12 in an unfolded state.
FIG. 15 is a partially enlarged view of location C in FIG. 14.
FIG. 16 is a schematic structural diagram of an insulating member in an unfolded state according to an embodiment of this application.
FIG. 17 is a schematic structural diagram of an insulating member which wraps the exterior of an electrode assembly in a folded manner according to an embodiment of this application.
FIG. 18 is a schematic cross-sectional view of the insulating member which wraps the exterior of the electrode assembly in a folded manner shown in FIG. 17.
FIG. 19 is a schematic structural diagram of the insulating member in an unfolded state shown in FIG. 17.
FIG. 20 is a schematic cross-sectional view of an insulating member which wraps the exterior of an electrode assembly in a folded manner according to an embodiment of this application.

The reference signs in the figures are:
1000. vehicle; 1100. battery; 1200. controller; 1300. motor; 10. box; 11. first portion; 12. second portion; 20. battery cell; 21. housing; 211. shell; 2111. mounting cavity; 212. end cover; 23. electrode assembly; 231. bent portion; 232. body portion; 2321. large surface; 2301. bottom surface; 2302. top surface; 233. tab; 24. electrode terminal; 25. pressure relief mechanism;
100. insulating member; 110. insulator; 111. side surface region; 1111. side surface portion; 112. large surface region; 113. bottom surface region; 1131. first insulating portion; 1132. second insulating portion; 1133. first bottom surface portion; 1134. second bottom surface portion; 11301. second through hole; 114. top surface region; 1141. first top surface portion; 1142. second top surface portion; 115. third insulating portion; 120. first buffer body; 121. first through hole; 122. receiving groove; 130. functional layer; 131. thermally conductive layer; 132. thermal insulation layer; 140. second buffer body; and 150. third buffer body.

### DESCRIPTION OF EMBODIMENTS

The embodiments of this application are described in detail below, and examples of the embodiments are illustrated in the accompanying drawings, where the same or similar reference numerals denote the same or similar elements or elements having the same or similar functions throughout. The embodiments described below with reference to the drawings are exemplary and intended to explain this application, and should not be construed as limiting this application.

In the description of this application, it should be understood that terms such as "length", "width", "upper", "lower", "front", "rear", "left", "right", "vertical", "horizontal", "top", "bottom", "inner", and "outer" indicate orientations or positional relationships based on those shown in the drawings, and are used only for convenience in describing this application and simplifying the description, rather than indicating or implying that the apparatus or element referred to must have a specific orientation or be constructed and operated in a specific orientation, and thus should not be construed as limiting this application.

Furthermore, the terms "first" and "second" are used for descriptive purposes only and should not be construed as indicating or implying relative importance or implicitly indicating the number of technical features indicated. Thus, a feature defined with "first" or "second" may explicitly or implicitly include one or more of such features. In the description of this application, "a plurality of" means two or more, unless explicitly and specifically defined otherwise.

In this application, unless explicitly specified and defined otherwise, terms such as "mounting", "connection", "join", and "fastening" should be understood broadly, for example, it may be a fixed connection, a detachable connection, or an integral connection; it may be a mechanical connection or an electrical connection; it may be a direct connection or an indirect connection through intermediaries; and it may be an internal communication between two elements or an interaction relationship between two elements. For those skilled in the art, the specific meanings of the above terms in this application can be understood based on specific circumstances.

In the description of this application, it should be noted that the term "and/or" is merely an associative relationship describing associated objects, indicating that three relationships may exist, for example, A and/or B may indicate: only A is present, both A and B are present, and only B is present.

It should also be noted that in the embodiments of this application, the same reference numerals denote the same components or parts. For identical parts in the embodiments of this application, only one part or component may be marked with the reference numeral in the drawings as an example, and it should be understood that the reference numerals apply equally to other identical parts or components.

In this application, the term such as "one embodiment", "some embodiments", "example", "specific example", or "some examples" means that the specific features, structures, materials, or characteristics described in connection with the embodiment or example are included in at least one embodiment or example of this application. In this specification, schematic expressions of the above terms do not necessarily refer to the same embodiment or example. Moreover, the specific features, structures, materials, or characteristics described may be combined in any suitable manner in any one or more embodiments or examples. Furthermore, as long as there is no conflict, those skilled in the art can combine and integrate different embodiments or examples and features of different embodiments or examples described in this specification.

Currently, from the perspective of market development, the application of traction batteries is becoming increasingly widespread. Traction batteries are not only used in energy storage systems such as hydropower, thermal power, wind power, and solar power plants, but also widely used in electric transportation tools such as electric bicycles, electric motorcycles, and electric vehicles, as well as in military equipment and aerospace fields. As the application areas of traction batteries continue to swell, the market demand for them is also constantly increasing.

Energy conservation and emission reduction are key to the sustainable development of the automotive industry. Electric vehicles, due to their advantages of energy conservation and environmental friendliness, have become an important component of the sustainable development of the automotive industry. For electric vehicles, battery technology is a critical factor in connection with their development. During the use of a battery, as the battery undergoes charge-discharge cycles, an electrode assembly within the battery is prone to lithium precipitation, which affects the service life of the battery.

A battery is typically provided with one or more battery cells inside, and the battery cell is internally provided with an electrode assembly where chemical reactions take place. The electrode assembly is usually formed by winding a positive electrode plate and a negative electrode plate. The electrode assembly formed by winding includes a body portion and a bent portion at an end portion of the body portion. An electrode plate in the body portion is substantially planar, while an electrode plate in the bent portion is arc-shaped. During charge-discharge cycles of the battery cell, the electrode assembly swells and contracts accordingly. The bent portion, due to an issue of excessive spacing between the negative electrode plate and the positive electrode plate caused by swelling, is prone to electrolyte bridge breakage and lithium precipitation, affecting the cycling performance of the battery cell and the service life of the battery.

Based on the above consideration, an embodiment of this application provides a battery cell. The battery cell includes a housing, as well as an insulating member and an electrode assembly that are located in a mounting cavity of the housing. The insulating member includes an insulator and a first buffer body connected to each other. The insulator wraps the exterior of the electrode assembly, thereby achieving insulation between the electrode assembly and the housing. The first buffer body is located between the bent portion of the electrode assembly and the housing. When the bent portion swells, it compresses the first buffer body, causing elastic deformation. The elastic deformation of the first buffer body can buffer the swelling of the bent portion, mitigating the swelling force of the bent portion, reducing the risk of excessive spacing between the negative electrode plate and the positive electrode plate, reducing the risk of electrolyte bridge breakage, alleviating the lithium precipitation at the bent portion, improving the cycling performance of the battery cell, and extending the service life of the battery.

The embodiments of this application disclose the battery cell, battery, and electric apparatus using the battery as a power source. The electric apparatus may be, but is not limited to, mobile phones, tablets, laptops, electric toys, electric tools, electric bicycles, electric vehicles, ships, and spacecraft. Electric toys may include fixed or mobile electric toys, such as game consoles, electric toy cars, electric toy ships, and electric toy airplanes. Spacecraft may include airplanes, rockets, space shuttles, spaceships, and the like.

For convenience of explanation, the following embodiments use an example in which an electric apparatus is a vehicle 1000 according to an embodiment of this application for description.

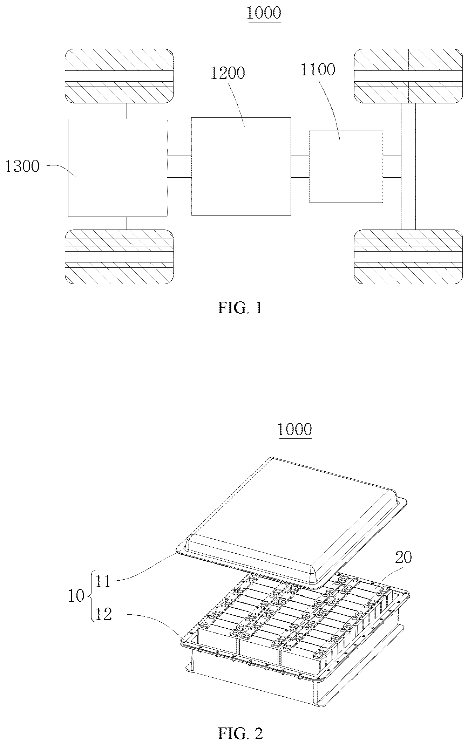

Referring to FIG. 1, FIG. 1 is a schematic structural diagram of a vehicle 1000 according to some embodiments of this application. The vehicle 1000 may be a fuel vehicle, a gas vehicle, or a new energy vehicle, and the new energy vehicle may be a battery electric vehicle, a hybrid vehicle, or an extended-range vehicle. A battery 1100 is disposed in the vehicle 1000, and the battery 1100 may be disposed at the bottom, front, or rear of the vehicle 1000. The battery 1100 may be configured to supply power to the vehicle 1000, for example, the battery 1100 may serve as an operational power source for the vehicle 1000. The vehicle 1000 may further include a controller 1200 and a motor 1300, where the controller 1200 is configured to control the battery 1100 to supply power to the motor 1300, for example, for the operational power requirements during starting, navigation, and driving of the vehicle 1000.

In some embodiments of this application, the battery 1100 may not only serve as an operational power source for the vehicle 1000 but also serve as a driving power source for the vehicle 1000, replacing or partially replacing fuel or natural gas to provide driving power for the vehicle 1000.

Referring to FIG. 2, as an embodiment of the battery 1100, the battery 1100 includes a box 10 and a battery cell 20, where the battery cell 20 is accommodated within the box 10. The box 10 is configured to provide an accommodation space for the battery cell 20, and the box 10 may adopt various structures. In some embodiments, the box 10 may include a first portion 11 and a second portion 12, where the first portion 11 and the second portion 12 cover each other, and the first portion 11 and the second portion 12 jointly define an accommodation space for accommodating the battery cell 20. The second portion 12 may be a hollow structure with an opening in one end, and the first portion 11 may be a plate-like structure. The first portion 11 covers the open side of the second portion 12, so that the first portion 11 and the second portion 12 jointly define the accommodation space. Alternatively, both the first portion 11 and the second portion 12 may be a hollow structure with an opening in one side, and the open side of the first portion 11 covers the open side of the second portion 12. The box 10 formed by the first portion 11 and the second portion 12 may be of various shapes, such as a cylinder or a cuboid.

In the battery 1100, there may be a plurality of battery cells 20, and the plurality of battery cells 20 may be connected in series, parallel, or series-parallel, where the series-parallel connection refers to a combination of a series connection and a parallel connection between the plurality of battery cells 20.

In one embodiment, the plurality of battery cells 20 may be directly connected in series, parallel, or series-parallel, and then an entirety formed by the plurality of battery cells 20 is accommodated within the box 10. Alternatively, the battery 1100 may be formed in a manner that a plurality of battery cells 20 are first connected in series, parallel, or series-parallel to form a battery module, and a plurality of battery modules are then connected in series, parallel, or series-parallel to form an entirety which is accommodated within the box 10. The battery 1100 may further include other structures, for example, the battery 1100 may further include a busbar for achieving electrical connection between the plurality of battery cells 20.

Each battery cell 20 may be a secondary battery or a primary battery, and may alternatively be a lithium-sulfur battery, sodium-ion battery, or magnesium-ion battery, but is not limited thereto. The battery cell 20 may be cylindrical, flat, cuboid, or of other shapes.

In another embodiment of the battery 1100, the battery 1100 may not include the box 10; instead, a plurality of battery cells 20 are electrically connected and assembled into an entirety through necessary fixing structures and then installed in an electric apparatus.

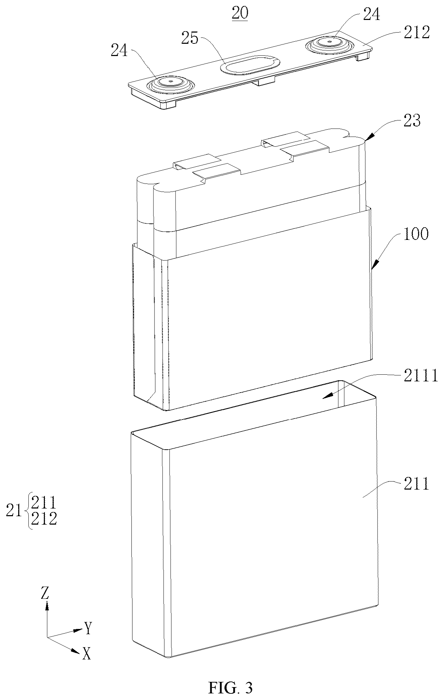

Referring to FIG. 3, FIG. 3 is a schematic structural exploded view of a battery cell 20 according to some embodiments of this application. The battery cell 20 refers to the smallest unit constituting the battery. As shown in FIG. 3, the battery cell 20 includes a housing 21, an electrode assembly 23, and other functional components. The housing 21 includes a shell 211 and an end cover 212, where the shell 211 covers an opening of the end cover 212, and the shell 211 and the end cover 212 jointly enclose a mounting cavity 2111. The mounting cavity 2111 provides mounting space for components such as the electrode assembly 23.

The end cover 212 refers to a component that covers an opening of the shell 211 to isolate the internal environment of the battery cell 20 from the external environment. Without limitation, the end cover 212 may be adapted to the shell 211 in shape so as to fit the shell 211. In one embodiment, the end cover 212 may be made of a material with specific hardness and strength (for example, aluminum alloy), so that the end cover 212 is less likely to deform during compression or collision, enabling the battery cell 20 to have higher structural strength and improved safety performance. The end cover 212 may be provided with a functional component such as an electrode terminal 24. The electrode terminal 24 may be configured to be electrically connected to the electrode assembly 23 for outputting or inputting electrical energy of the battery cell 20.

In some embodiments, the end cover 212 may alternatively be provided with a pressure relief mechanism 25 configured to release internal pressure when the internal pressure or temperature of the battery cell 20 reaches a threshold. The end cover 212 may be made of various materials, such as copper, iron, aluminum, stainless steel, aluminum alloy, or plastic.

In some embodiments, an insulating sheet may be provided on an inner side of the end cover 212, and the insulating sheet may be configured to isolate an electrical connection component within the shell 211 from the end cover 212, so as to reduce the risk of short circuits. For example, the insulating sheet may be made of plastic, rubber, or the like.

The shell 211 is a component configured to cooperate with the end cover 212 to form the internal environment of the battery cell 20, where the formed internal environment may be used for accommodating the electrode assembly 23, an electrolyte, and other components. The shell 211 and the end cover 212 may be independent components, the shell 211 is provided with an opening, and the end cover 212 covers the opening to form the internal environment of the battery cell 20. Without limitation, the end cover 212 and the shell 211 may alternatively be integrated. Specifically, the end cover 212 and the shell 211 may form a common connection surface before other components are placed into the shell, and when the interior of the shell 211 needs to be sealed, the end cover 212 covers the shell 211. The shell 211 may have various shapes and sizes, such as a cuboid shape, a cylindrical shape, and a hexagonal prism shape. Specifically, the shape of the shell 211 may be determined based on the specific shape and size of the electrode assembly 23. The shell 211 may be made of various materials, such as copper, iron, aluminum, stainless steel, aluminum alloy, or plastic, and this is not particularly limited in the embodiments of this application.

The electrode assembly 23 is a component in the battery cell 20 where electrochemical reactions take place. The shell 211 may include one or more electrode assemblies 23 therein. The electrode assembly 23 includes a positive electrode, a negative electrode, and a separator. During charging and discharging of the battery cell, active ions (for example, lithium ions) intercalate and deintercalate back and forth between the positive electrode and the negative electrode. The separator is disposed between the positive electrode and the negative electrode, serving to prevent short circuits between the positive and negative electrodes while allowing the active ions to pass through.

In some embodiments, the positive electrode may be a positive electrode plate. The positive electrode plate may include a positive electrode current collector and a positive electrode active material disposed on at least one surface of the positive electrode current collector.

In some embodiments, the negative electrode may be a negative electrode plate. The negative electrode plate may include a negative electrode current collector and a negative electrode active material disposed on at least one surface of the negative electrode current collector.

In some embodiments, the separator is a separating film. This application does not impose specific limitations on the type of the separating film, and any well-known porous separating film with good chemical and mechanical stability may be used.

In some embodiments, the electrode assembly 23 is a wound structure. The positive electrode plate and the negative electrode plate are wound into a wound structure.

In this application, for convenience of description, a Z axis in the drawings represents an up-down direction, where a positive direction of the Z axis indicates up and a negative direction of the Z axis indicates down; a Y axis in the drawings represents a left-right direction, where a positive direction of the Y axis indicates right and a negative direction of the Y axis indicates left; an X axis in the drawings represents a front-rear direction, where a positive direction of the X axis indicates front and a negative direction of the X axis indicates rear; a Z1 axis in the drawings represents an up-down direction, where a positive direction of the Z1 axis indicates up and a negative direction of the Z1 axis indicates down; a Y1 axis in the drawings represents a left-right direction, where a positive direction of the Y1 axis indicates right and a negative direction of the Y1 axis indicates left; and an X1 axis in the drawings represents a front-rear direction, where a positive direction of the X1 axis indicates front and a negative direction of the X1 axis indicates rear.

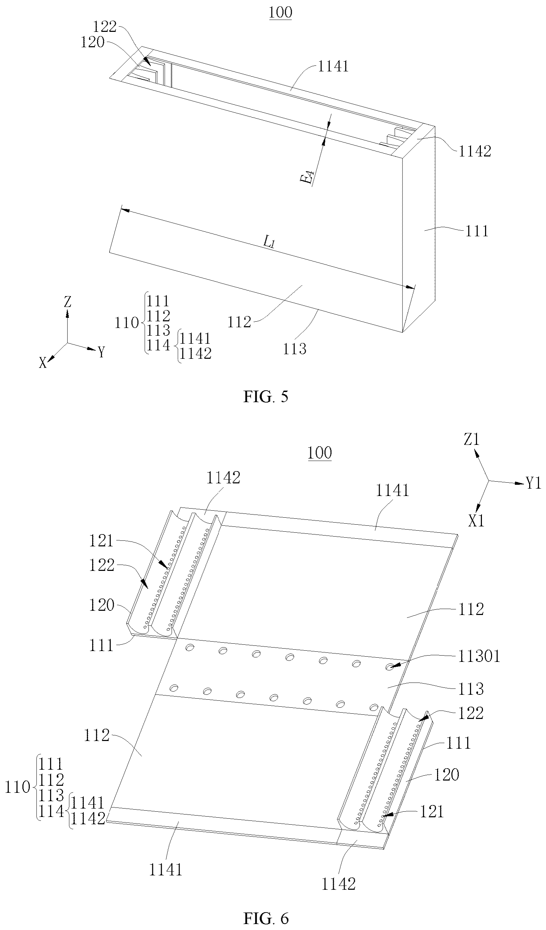

In one embodiment of this application, as shown in FIG. 3 to FIG. 5, a battery cell 20 is provided. The battery cell 20 includes a housing 21, an insulating member 100, and an electrode assembly 23, where the housing 21 is provided with a mounting cavity 2111, and the insulating member 100 and the electrode assembly 23 are both located in the mounting cavity 2111. Referring to FIG. 6 to FIG. 8, the insulating member 100 includes an insulator 110 and a first buffer body 120 connected to each other, where the insulator 110 wraps the exterior of the electrode assembly 23, the electrode assembly 23 includes a body portion 232 and a bent portion 231 connected to an end portion of the body portion 232, and the first buffer body 120 is located between the bent portion 231 and the housing 21.

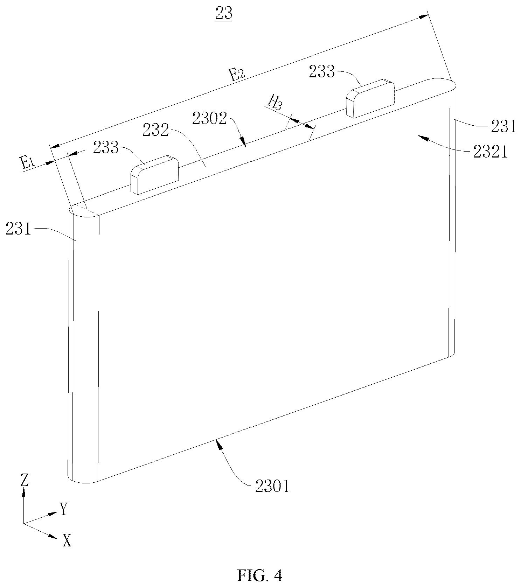

The electrode assembly 23 refers to a component where electrochemical reactions take place, and the electrode assembly 23 is the wound structure described above. The electrode assembly 23 includes a body portion 232 and a bent portion 231, where the body portion 232 may refer to a flat portion formed by winding the positive electrode plate and the negative electrode plate, and the bent portion 231 may refer to an arc-shaped portion formed after winding the positive electrode plate and the negative electrode plate. For example, as shown in FIG. 4, the body portion 232 may refer to a flat portion in the middle of the electrode assembly 23, and the bent portion 231 may refer to arc-shaped portions on left and right sides of the electrode assembly 23.

The housing 21 refers to a component configured to accommodate the electrode assembly 23 and the insulating member 100. The housing 21 is provided with a mounting cavity 2111 inside, where the electrode assembly 23 and the insulating member 100 are both located in the mounting cavity 2111, and the mounting cavity 2111 provides mounting space for the electrode assembly 23 and the insulating member 100.

The insulating member 100 refers to a component which wraps the exterior of the electrode assembly 23 to insulate and separate the electrode assembly 23 from the housing 21. The insulating member 100 includes an insulator 110 and a first buffer body 120 connected to each other, and the insulator 110 and the first buffer body 120 are connected to each other to form an integral component. Thus, during an assembly process of the battery cell 20, the insulating member 100 and the electrode assembly 23 can be assembled to complete the assembly of the insulator 110, the first buffer body 120, and the electrode assembly 23, without separately assembling the insulator 110 and the first buffer body 120, thereby reducing assembly steps and improving the production efficiency of the battery cell 20. Additionally, fewer assembly steps facilitate mechanized production, further improving the production efficiency. The insulator 110 and the first buffer body 120 may be connected by bonding, hot pressing, snapping, or the like.

The insulator 110 refers to a component made of an insulating material, and the insulating material should be made of a material with good resistance to the electrolyte, so as to be applicable to the internal environment of the battery cell 20. For example, the insulating material may be polyethylene terephthalate, polyethylene, or polypropylene. These materials have good resistance to the electrolyte, excellent insulating properties, and low costs, making them convenient to produce, manufacture, and use. For example, the material of the insulator 110 is polypropylene.

The insulator 110 wraps the exterior of the electrode assembly 23, allowing the electrode assembly 23 and the housing 21 to be separated by the insulator 110 to achieve insulation between the electrode assembly 23 and the housing 21. The insulator 110 may wrap the exterior of the electrode assembly 23 by folding, and the insulator 110 may be unfolded into a sheet-like form. Alternatively, the insulator 110 may be a box structure, and the electrode assembly 23 is placed inside the box structure, so that the electrode assembly 23 is wrapped. Certainly, in other embodiments, the insulator 110 may adopt other structures.

The first buffer body 120 refers to a component made of a buffering material. The buffering material is typically elastic, and the first buffer body 120 is elastic, so that the first buffer body 120 can undergo elastic deformation under the action of an external force and automatically recover after the external force is removed. To adapt to the internal environment of the battery 1100, the buffering material should be made of a material with good resistance to the electrolyte, such as aerogel, foam material, or rubber. For example, the material of the buffer body may be one or more of ethylene-vinyl acetate copolymer, foamed polyurethane, foamed polypropylene, foamed polyethylene, styrene-butadiene rubber, butadiene rubber, or silica aerogel. These materials have good resistance to the electrolyte, strong buffering capability and pressure resistance, and mature processes, and are easy to purchase, easy to process, and convenient to produce, manufacture, and use.

In the battery cell 20 of this embodiment of this application, the battery cell 20 includes a housing 21, an electrode assembly 23, and an insulating member 100, where the electrode assembly 23 and the insulating member 100 are located in the mounting cavity 2111 of the housing 21. The insulating member 100 includes an insulator 110 and a first buffer body 120 connected to each other, where the insulator 110 wraps the exterior of the electrode assembly 23 to achieve insulation between the electrode assembly 23 and the housing 21. The first buffer body 120 is located between the bent portion 231 and the housing 21. When the bent portion 231 swells, the bent portion 231 swells toward the housing 21, and the bent portion 231 compresses the first buffer body 120, causing elastic deformation. The elastic deformation of the first buffer body 120 can buffer the swelling of the bent portion 231, mitigating the swelling force of the bent portion 231, reducing the risk of excessive spacing between the negative electrode plate and the positive electrode plate, reducing the risk of electrolyte bridge breakage, alleviating the lithium precipitation at the bent portion 231, improving the cycling performance of the battery cell 20, and extending the service life of the battery 1100.

In another embodiment of this application, as shown in FIG. 3 to FIG. 5, the first buffer body 120 of the provided battery cell 20 is located between a surface of the bent portion 231 facing away from the body portion 232 and the housing 21.

The surface of the bent portion 231 facing away from the body portion 232, for example, as shown in FIG. 4, may refer to an arc-shaped surface on a left side or an arc-shaped surface on a right side of the electrode assembly 23.

In the battery cell 20 of this embodiment of this application, the surface of the bent portion 231 facing away from the body portion 232 exhibits significant swelling compared to other portions of the bent portion 231. The first buffer body 120 can mitigate the swelling force of the surface of the bent portion 231 facing away from the body portion 232. To be specific, the swelling force of a significant swelling position of the bent portion 231 can be mitigated significantly reducing the risks of bridge breakage and lithium precipitation in the electrode assembly 23.

In another embodiment of this application, as shown in FIG. 3 to FIG. 5, the insulator 110 of the provided battery cell 20 includes a side surface region 111, where the side surface region 111 covers the surface of the bent portion 231 facing away from the body portion 232.

The side surface region 111 may refer to a region of the insulator 110 covering the surface of the bent portion 231 facing away from the body portion 232 or a region of the insulator 110 located between the surface of the bent portion 231 facing away from the body portion 232 and the housing 21, such as a left wall or right wall of the insulator 110, as shown in FIG. 5.

In the battery cell 20 of this embodiment of this application, the side surface region 111 is located between the surface of the bent portion 231 facing away from the body portion 232 and the housing 21. The side surface region 111 can achieve insulation between the surface of the bent portion 231 facing away from the body portion 232 and the housing 21, reducing the risk of short circuits and improving the use reliability of the battery cell 20.

In another embodiment of this application, as shown in FIG. 3 to FIG. 5, a surface of the side surface region 111 facing the bent portion 231 of the provided battery cell 20 is connected to the first buffer body 120.

In the battery cell 20 of this embodiment of this application, the surface of the side surface region 111 facing the bent portion 231 is connected to the first buffer body 120, the first buffer body 120 is located between the side surface region 111 and the surface of the bent portion 231 facing away from the body portion 232, and the surface of the bent portion 231 facing away from the body portion 232, after swelling, can directly come into contact with the first buffer body 120 and compress the first buffer body 120, allowing a swelling force of the surface of the bent portion 231 facing away from the body portion 232 to be promptly mitigated, achieving a good effect in mitigating the swelling force of the surface of the bent portion 231 facing away from the body portion 232, and helping to alleviate lithium precipitation in the electrode assembly 23.

In another embodiment of this application, a surface of the side surface region 111 facing away from the bent portion 231 of the provided battery cell 20 is connected to the first buffer body 120.

In the battery cell 20 of this embodiment of this application, the surface of the side surface region 111 facing away from the bent portion 231 is connected to the first buffer body 120, and the side surface region 111 is located between the surface of the bent portion 231 facing away from the body portion 232 and the first buffer body 120. When the surface of the bent portion 231 facing away from the body portion 232 swells, the surface of the bent portion 231 facing away from the body portion 232 compresses the side surface region 111, and the side surface region 111 compresses the first buffer body 120, causing elastic deformation, thereby mitigating the swelling force of the surface of the bent portion 231 facing away from the body portion 232.

In another embodiment of this application, the surface of the side surface region 111 facing the bent portion 231 and the surface facing away from the bent portion 231 of the provided battery cell 20 are both connected to the first buffer body 120.

In the battery cell 20 of this embodiment of this application, the surface of the side surface region 111 facing the bent portion 231 and the surface facing away from the bent portion 231 are both connected to the first buffer body 120. The surface of the bent portion 231 facing away from the body portion 232 swells to compress two first buffer bodies 120, causing elastic deformation. A large number of the first buffer bodies 120 provides a good effect in mitigating the swelling force of the bent portion 231.

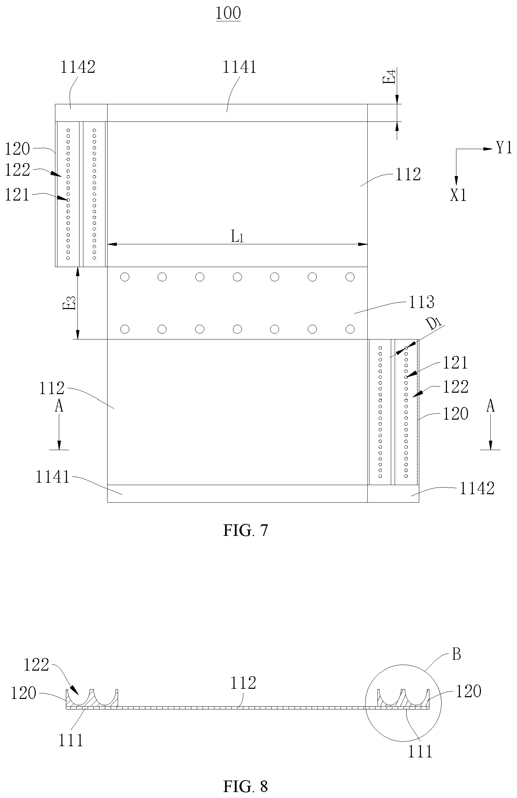

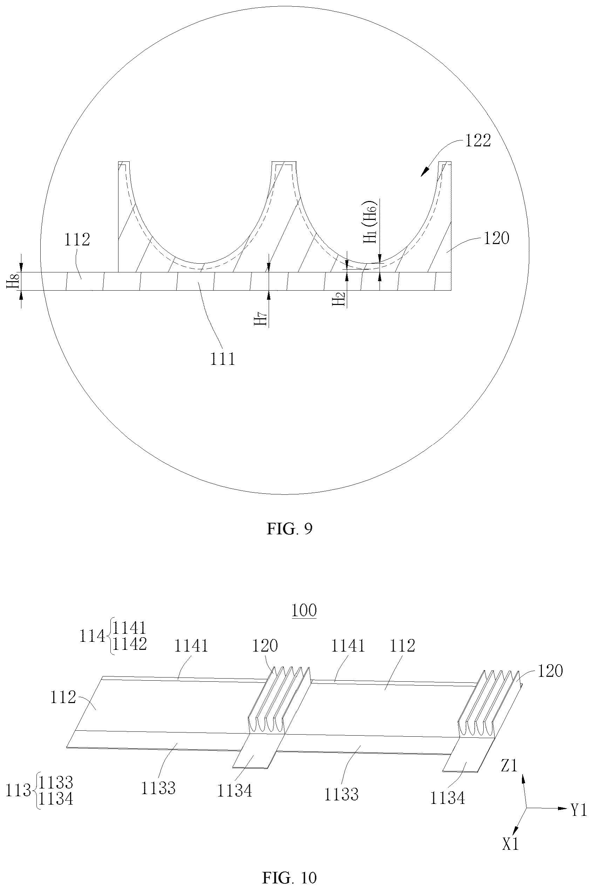

In another embodiment of this application, as shown in FIG. 8 and FIG. 9, a thickness of the side surface region 111 of the provided battery cell 20 is H₇, and 0.05 millimeter (mm)≤H₇≤2 mm.

In the battery cell 20 of this embodiment of this application, by limiting the thickness H₇ of the side surface region 111 within the range of 0.05 mm≤H₇≤2 mm, the side surface region 111 has a specific thickness, enabling the side surface region 111 to have a good insulation effect. Additionally, the thickness H₇ of the side surface region 111 is not excessively large, avoiding occupying a large space in the mounting cavity 2111, thereby helping to increase the energy density of the battery cell 20.

In one embodiment, the thickness H₇ may be, but is not limited to, 0.05 mm, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm.

In another embodiment of this application, as shown in FIG. 8 and FIG. 9, in the provided battery cell 20, 0.05 mm≤H₇≤1 mm.

In the battery cell 20 of this embodiment of this application, through the design of 0.05 mm≤H₇≤1 mm, while the side surface region 111 maintains good insulating performance, the thickness H₇ of the side surface region 111 can be designed to be small, further reducing the space occupied by the side surface region 111 in the mounting cavity 2111, thereby further increasing the energy density of the battery cell 20.

In one embodiment, the thickness H₇ may be, but is not limited to, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, or 1 mm.

In another embodiment of this application, as shown in FIG. 6 and FIG. 7, the insulating member 100 of the provided battery cell 20 is provided with a first through hole 121 extending through the side surface region 111 and the first buffer body 120, where the first through hole 121 can allow an electrolyte to pass through so that the electrolyte can flow to the bent portion 231 of the electrode assembly 23.

The first through hole 121 refers to a through hole extending through the side surface region 111 and the first buffer body 120. For example, as shown in FIG. 6, the side surface region 111 and the first buffer body 120 are stacked, and the first through hole 121 runs through the side surface region 111 and the first buffer body 120 along a thickness direction (direction Z1) of the first buffer body 120.

In another embodiment, the first through hole 121 may alternatively run through the side surface region 111 and the first buffer body 120 obliquely relative to the thickness direction of the first buffer body 120. The first through hole 121 may be of various shapes, such as a circular shape, a polygonal shape, or an elliptical shape. The specific shape and structure of the first through hole 121 may be determined based on actual needs and are not limited herein.

In the battery cell 20 of this embodiment of this application, the electrolyte outside the insulating member 100 can flow to the bent portion 231 through the first through hole 121, realizing electrolyte replenishment for the bent portion 231, thereby improving the cycling performance of the battery cell 20.

In another embodiment of this application, as shown in FIG. 6 and FIG. 7, a diameter range of the first through hole 121 of the provided battery cell 20 is 0.1 mm to 30 mm.

In the battery cell 20 of this embodiment of this application, by setting the diameter D₁ of the first through hole 121 within the range of 0.1 mm to 30 mm, the first through hole 121 has an appropriate diameter. On one hand, this allows the electrolyte to flow to the bent portion 231 through the first through hole 121 for electrolyte replenishment. On the other hand, the diameter D₁ of the first through hole 121 is not excessively large, preventing an excessively large size of hollow regions on the side surface region 111 and the first buffer body 120, enabling the side surface region 111 to provide a good insulation effect and enabling the first buffer body 120 to provide a good buffering effect.

In one embodiment, the diameter D₁ of the first through hole 121 may be, but is not limited to, 0.1 mm, 5 mm, 10 mm, 15 mm, 20 mm, 25 mm, or 30 mm.

In another embodiment of this application, as shown in FIG. 6 and FIG. 7, the diameter range of the first through hole 121 of the provided battery cell 20 is 1 mm to 5 mm.

In the battery cell 20 of this embodiment of this application, by setting the diameter D₁ of the first through hole 121 within the range of 1 mm to 5 mm, the first through hole 121 has a more appropriate diameter. On one hand, the electrolyte can smoothly flow to the bent portion 231 through the first through hole 121 for electrolyte replenishment, achieving a better electrolyte replenishment effect, thereby improving the cycling performance of the battery cell 20. On the other hand, the diameter D₁ of the first through hole 121 is not excessively large, enabling the side surface region 111 to provide a better insulation effect and enabling the first buffer body 120 to provide a better buffering effect.

In one embodiment, the diameter D₁ of the first through hole 121 may be, but is not limited to, 1 mm, 1.5 mm, 2 mm, 2.5 mm, 3 mm, 3.5 mm, 4 mm, 4.5 mm, or 5 mm.

In another embodiment of this application, as shown in FIG. 6 and FIG. 7, the number of the first through holes 121 of the provided battery cell 20 is N₁, a cross-sectional area of the first through hole 121 is S₁, a projection area of the first buffer body 120 along the thickness direction of the first buffer body 120 is S₂, and N₁*S₁≤0.1S₂.

The cross-sectional area S₁ of the first through hole 121 may refer to an area of a shape obtained by using the first through hole 121 to section a plane perpendicular to the thickness direction (direction Z1) of the first buffer body 120. For example, as shown in FIG. 6, there are a plurality of first through holes 121, and the plurality of first through holes 121 are spaced apart on the first buffer body 120, where the first through holes 121 may be arranged in a linear manner or matrix manner. A specific arrangement manner may be determined based on actual needs and are not limited herein.

The projection area S₂ of the first buffer body 120 along the thickness direction of the first buffer body 120 may refer to an area of a projection image obtained by projecting the first buffer body 120 onto a plane perpendicular to the thickness direction of the first buffer body 120.

In the battery cell 20 of this embodiment of this application, through the design of N₁*S₁≤0.1S₂, a ratio of a total cross-sectional area of the first through holes 121 to an area of the first buffer body 120 is less than 0.1, meaning the first through holes 121 occupy a small region of the first buffer body 120. To be specific, the first buffer body 120 has a small hollow region, enabling the first buffer body 120 to provide a good buffering effect for the electrode assembly 23, thereby improving the cycling performance of the battery cell 20.

In another embodiment of this application, as shown in FIG. 3, FIG. 4, and FIG. 5, a projection of the bent portion 231 along a width direction (direction Y) of the body portion 232 of the provided battery cell 20 is located within a projection of the first buffer body 120 along the width direction of the body portion 232.

The projection of the bent portion 231 along the width direction of the body portion 232 is located within the projection of the first buffer body 120 along the width direction of the body portion 232, which can be understood as: a plane perpendicular to the width direction of the body portion 232 is defined as a first projection plane, the bent portion 231 is projected onto the first projection plane along the width direction of the body portion 232 to obtain a first projection image, the first buffer body 120 is projected onto the first projection plane along the width direction of the body portion 232 to obtain a second projection image, and the first projection image and the second projection image entirely overlap; alternatively, the first projection image is located within the second projection image, meaning the first buffer body 120 can cover the entire bent portion 231. Thus, during the swelling of the bent portion 231, most regions of the bent portion 231 can come into contact with the first buffer body 120 and compress the first buffer body 120, mitigating the swelling of most regions of the bent portion 231, thereby helping to reduce the risk of lithium precipitation at the bent portion 231.

In another embodiment of this application, as shown in FIG. 6 to FIG. 8, the first buffer body 120 of the provided battery cell 20 is provided with a receiving groove 122 for accommodating the bent portion 231, where a wall of the receiving groove 122 is capable of being attached to the surface of the bent portion 231 facing away from the body portion 232.

The receiving groove 122 refers to a groove formed by the first buffer body 120, where the bent portion 231 can be accommodated in the groove. The receiving groove 122 may be of various shapes, such as an arc-shaped groove or a trapezoidal groove.

The wall of the receiving groove 122 being capable of being attached to the surface of the bent portion 231 facing away from the body portion 232 may mean that before the bent portion 231 swells, the surface of the bent portion 231 facing away from the body portion 232 is attached to the wall of the receiving groove 122. Alternatively, during the swelling of the bent portion 231, the surface of the bent portion 231 facing away from the body portion 232 is attached to the wall of the receiving groove 122. For example, the shape of the wall of the receiving groove 122 may be designed to be the same as the shape of the surface of the bent portion 231 facing away from the body portion 232. For example, an outer wall of the bent portion 231 of the electrode assembly 23 formed by winding is an arc-shaped surface, and the wall of the receiving groove 122 is also an arc-shaped surface.

In the battery cell 20 of this embodiment of this application, when the bent portion 231 swells, the surface of the bent portion 231 facing away from the body portion 232 is attached to the wall of the receiving groove 122 and compresses the wall of the receiving groove 122, causing elastic deformation, so that the first buffer body 120 can mitigate the swelling across the entire surface of the bent portion 231 facing away from the body portion 232, thereby helping to reduce the risk of lithium precipitation at the bent portion 231.

In another embodiment of this application, as shown in FIG. 4, FIG. 5, and FIG. 9, in the provided battery cell 20, when the first buffer body 120 is not under pressure, a thickness at the thinnest part of the first buffer body 120 is H₁, a width of the bent portion 231 is E₁, and 0.05 mm≤H₁≤0.6E₁.

The thickness H₁ at the thinnest part of the first buffer body 120, for example, as shown in FIG. 9, may refer to a thickness of the first buffer body 120 at the lowest point of the receiving groove 122.

The width E₁ of the bent portion 231, for example, as shown in FIG. 4, may refer to a dimension of the bent portion 231 in the width direction (direction Y) of the body portion 232.

In the battery cell 20 of this embodiment of this application, through the design of 0.05 mm≤H₁≤0.6E₁, the first buffer body 120 has a specific thickness at its thinnest part, enabling the first buffer body 120 to mitigate the swelling of the bent portion 231 at the thinnest part, thereby improving the cycling performance of the battery cell 20. Additionally, the thickness H₁ at the thinnest part of the first buffer body 120 is correlated with the width E₁ of the bent portion 231, meaning a ratio of the thickness H₁ at the thinnest part of the first buffer body 120 to the width E₁ of the bent portion 231 is less than or equal to 0.6. This allows the thickness H₁ at the thinnest part of the first buffer body 120 to be reasonably designed based on electrode assemblies 23 of different sizes, to mitigate the swelling of the bent portions 231 of the electrode assemblies 23 of different sizes, thereby keeping the spacing between the positive and negative electrode plates in the bent portion 231 within an appropriate range. Furthermore, the reasonable design of the thickness H₁ at the thinnest part of the first buffer body 120 can also reduce material usage, reduce costs, and reduce the space occupied by the first buffer body 120 in the mounting cavity 2111, thereby increasing the energy density of the battery cell 20.

In one embodiment, H₁ may be, but is not limited to, 0.05 mm, 0.1 mm, 0.15 mm, 0.2 mm, 0.25 mm, 0.3 mm, 0.05E₁, 0.1E₁, 0.15E₁, 0.2E₁, 0.25E₁, 0.3E₁, 0.35E₁, 0.4E₁, 0.45E₁, 0.5E₁, 0.55 E₁, or 0.6E₁.

In another embodiment of this application, as shown in FIG. 4, FIG. 5, and FIG. 9, in the provided battery cell 20, 0.05 mm≤H₁≤0.3E₁.

In the battery cell 20 of this embodiment of this application, through the design of 0.05 mm≤H₁≤0.3E₁, a ratio of the thickness H₁ at the thinnest part to the width of the bent portion 231 is less than or equal to 0.3. Thus, while buffering performance requirements are satisfied, the thickness H₁ at the thinnest part of the first buffer body 120 can be designed to be small based on electrode assemblies 23 of different sizes, further reducing material usage, reducing costs, and further reducing the space occupied by the first buffer body 120 in the mounting cavity 2111, thereby further increasing the energy density of the battery cell 20.

In one embodiment, H₁ may be, but is not limited to, 0.05 mm, 0.1 mm, 0.15 mm, 0.2 mm, 0.25 mm, 0.3 mm, 0.05E₁, 0.075E₁, 0.1E₁, 0.125E₁, 0.15E₁, 0.175E₁, 0.2E₁, 0.225E₁, 0.25E₁, 0.275E₁, or 0.3E₁.

In another embodiment of this application, as shown in FIG. 4, FIG. 5, and FIG. 9, in the provided battery cell 20, when the first buffer body 120 is under pressure, the thickness at the thinnest part of the first buffer body 120 is H₂, the width of the bent portion 231 is E₁, and 0.005 mm≤H₂≤0.2E₁.

The width E₁ of the bent portion 231 may refer to a spacing between an innermost electrode plate and an outermost electrode plate within the bent portion 231, or may refer to a dimension of the bent portion 231 along the width direction (direction Y) of the body portion 232.

After a plurality of cycles of the battery cell 20, the electrode assembly 23 is in a swelling state and thus compresses the first buffer body 120. Under this condition, the first buffer body 120 is under pressure. The condition that the first buffer body 120 is under pressure in this embodiment of this application may refer to a compressed state of the first buffer body 120 when a cycling capacity of the battery cell 20 is less than or equal to 90%.

In the battery cell 20 of this embodiment of this application, through the design of 0.005 mm≤H₂≤0.2E₁, after the first buffer body 120 is compressed, the first buffer body 120 has a specific thickness at its thinnest part, indicating that the first buffer body 120 effectively mitigates the swelling of the bent portion 231. Additionally, after the first buffer body 120 is compressed, the thickness H₂ at the thinnest part of the first buffer body 120 is correlated with the thickness of the bent portion 231, meaning a ratio of the thickness H₂ at the thinnest part of the first buffer body 120 to the width of the bent portion 231 is less than or equal to 0.2. Thus, in design, the thickness at the thinnest part of the first buffer body 120 can be reasonably designed based on electrode assemblies 23 of different sizes to mitigate the swelling of the bent portion 231 of the electrode assemblies 23 of different sizes, thereby keeping the spacing between the positive and negative electrode plates in the bent portion 231 within an appropriate range. Furthermore, the reasonable design of the thickness H₂ at the thinnest part of the first buffer body 120 also can reduce material usage, reduce costs, and reduce the space occupied by the first buffer body 120 in the mounting cavity 2111, thereby increasing the energy density of the battery cell 20.

In one embodiment, H₂ may be, but is not limited to, 0.005 mm, 0.01 mm, 0.015 mm, 0.02 mm, 0.025 mm, 0.03 mm, 0.05E₁, 0.075E₁, 0.1E₁, 0.125E₁, 0.15E₁, 0.175E₁, or 0.2E₁.

In another embodiment of this application, as shown in FIG. 4, FIG. 5, and FIG. 9, in the provided battery cell 20, 0.005 mm≤H₂≤0.1E₁.

In the battery cell 20 of this embodiment of this application, through the design of 0.005 mm≤H₂≤0.1E₁, after the first buffer body 120 is compressed, the ratio of the thickness H₂ at the thinnest part of the first buffer body 120 to the width E₁ of the bent portion 231 is less than or equal to 0.1. Thus, in design, the thickness at the thinnest part of the first buffer body 120 can be designed to be smaller based on electrode assemblies 23 of different sizes, further reducing material usage, reducing costs, and further reducing the space occupied by the first buffer body 120 in the mounting cavity 2111, thereby increasing the energy density of the battery cell 20.

In one embodiment, H₂ may be, but is not limited to, 0.005 mm, 0.01 mm, 0.015 mm, 0.02 mm, 0.025 mm, 0.03 mm, 0.01E₁, 0.02E₁, 0.03E₁, 0.04E₁, 0.05E₁, 0.06E₁, 0.07E₁, 0.08E₁, 0.09E₁, or 0.1E₁.

In another embodiment of this application, as shown in FIG. 6 to FIG. 9, the body portion 232 of the provided battery cell 20 includes a large surface 2321 connected to the surface of the bent portion 231 facing away from the body portion 232, the insulator 110 further includes a large surface region 112, the large surface region 112 covers the large surface 2321, and a thickness of the body portion 232 is H₃. When the large surface region 112 is not under pressure, a thickness of the insulating member 100 at the large surface region 112 is H₄, and 0.04 mm≤H₄≤0.2H₃.

The large surface 2321 refers to a side surface of the body portion 232 connected to the surface of the bent portion 231 facing away from the body portion 232. In a wound electrode assembly 23, the large surface 2321 may refer to a planar region in a surface of the outermost electrode plate facing away from the inner electrode plate. For example, as shown in FIG. 4, the large surface 2321 refers to a side surface of the body portion 232 parallel to the width direction (referring to a direction Y in FIG. 4), that is, a front side surface or a rear side surface of the electrode assembly 23.

The large surface region 112 refers to a portion of the insulator 110 covering the large surface 2321 after the insulator 110 wraps the exterior of the electrode assembly 23, for example, a front wall or a rear wall of the insulator 110 as shown in FIG. 5.

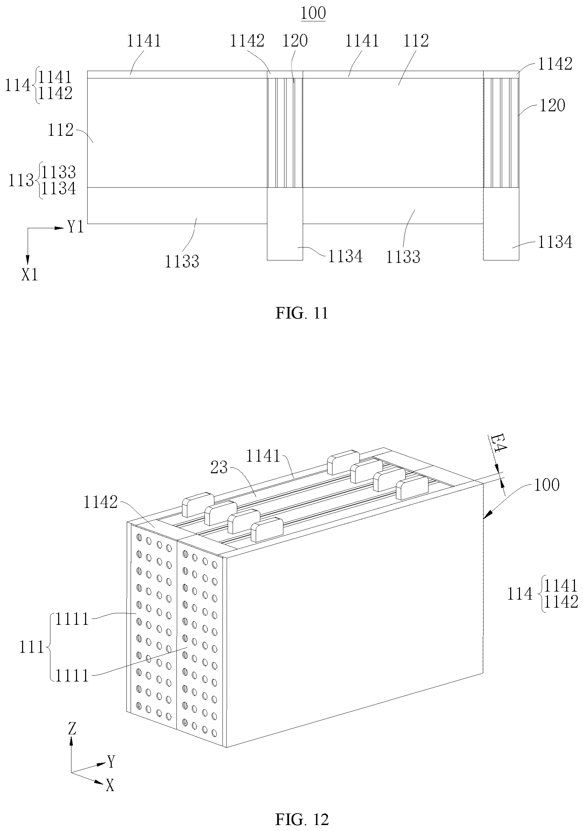

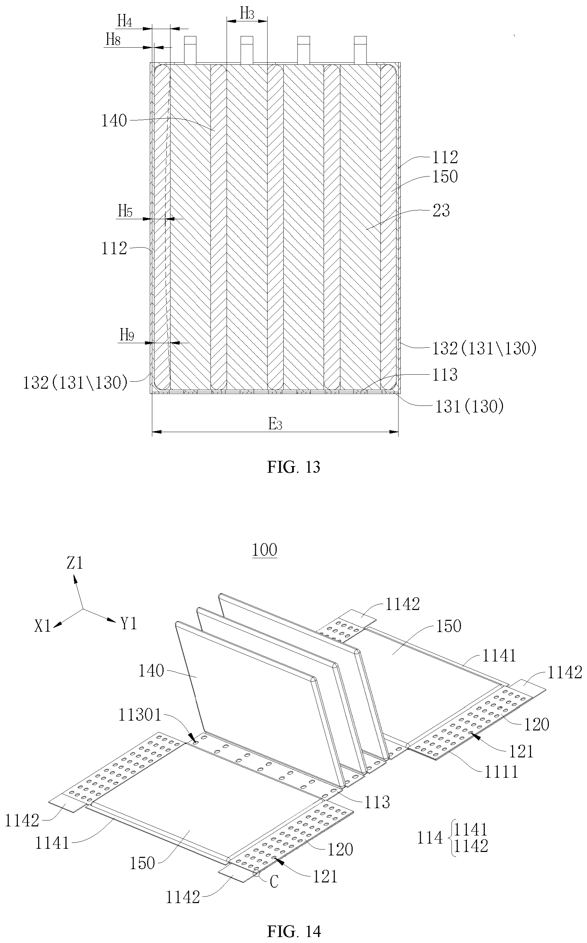

The thickness H₄ of the insulating member 100 at the large surface region 112, as shown in FIG. 5, may alternatively refer to a thickness of a front wall or a rear wall of the insulating member 100. It should be noted that, as shown in FIG. 12 and FIG. 13, if a third buffer body 150 is connected to the large surface region 112 in a stacked manner, the thickness H₄ of the insulating member 100 at the large surface region 112 is equal to a sum of a thickness H₉ of the third buffer body 150 and a thickness H₈ of the large surface region 112. As shown in FIG. 9, if no third buffer body 150 is connected to the large surface region 112, the thickness H₄ of the insulating member 100 at the large surface region 112 is equal to the thickness H₈ of the large surface region 112.

In the battery cell 20 of this embodiment of this application, the large surface region 112 can separate the large surface 2321 of the electrode assembly 23 from the housing 21, achieving insulation between the large surface 2321 and the housing 21. The design of 0.04 mm≤H₄≤0.2H₃ ensures that the insulating member 100 has a specific thickness at the large surface region 112 and the insulating member 100 has specific structural strength at the large surface region 112, achieving insulation of the large surface 2321. The thickness H₄ of the insulating member 100 at the large surface region 112 is correlated with the thickness H₃ of the body portion 232, meaning a ratio of the thickness H₄ of the insulating member 100 at the large surface region 112 to the thickness H₃ of the body portion 232 is less than or equal to 0.2. This allows the thicknesses H₄ of different insulating members 100 at the large surface region 112 to be reasonably designed based on electrode assemblies 23 of different sizes, preventing the thicknesses H₄ from being excessively large, which helps to reduce material usage and reduces manufacturing costs. Moreover, a portion of the insulating member 100 at the large surface region 112 is prevented from occupying excessive space in the mounting cavity 2111, thereby helping to increase the energy density of the battery cell 20.

In one embodiment, H₄ may be, but is not limited to, 0.04 mm, 0.05 mm, 0.1 mm, 0.15 mm, 0.2 mm, 0.25 mm, 0.3 mm, 0.1H₃, 0.125H₃, 0.15H₃, 0.175H₃, or 0.2H₃.

In another embodiment of this application, as shown in FIG. 13, in the provided battery cell 20, when the large surface region 112 is under pressure, a thickness of the insulating member 100 at the large surface region 112 is H₅, and 0.004 mm≤H₅≤0.1H₃.

After a plurality of cycles of the battery cell 20, the large surface 2321 of the electrode assembly 23 swells to compress the large surface region 112. Under this condition, the large surface region 112 is in a compressed state. The condition that the large surface region 112 is under pressure in this embodiment of this application may refer to a compressed state of the large surface region 112 when a cycling capacity of the battery cell 20 is less than or equal to 90%.

In the battery cell 20 of this embodiment of this application, through the design of 0.004 mm≤H₅≤0.1H₃, after the large surface region 112 is compressed, the insulating member 100 still has a specific thickness at the large surface region 112. Under this condition, the large surface region 112 can still achieve insulation between the large surface 2321 and the housing 21, reducing the risk of short circuits and improving the use reliability of the battery cell 20. Additionally, after the large surface region 112 is compressed, the thickness H₅ of the insulating member 100 at the large surface region 112 is correlated with the thickness H₃ of the body portion 232, meaning a ratio of the thickness H₅ of the insulating member 100 at the large surface region 112 to the thickness H₃ of the body portion 232 is less than or equal to 0.1. This allows the thicknesses of different insulating members 100 at the large surface region 112 to be reasonably designed based on electrode assemblies 23 of different sizes, preventing the thicknesses H₅ of the insulating members 100 at the large surface region 112 from being excessively large, which helps to reduce material usage and reduces manufacturing costs. Moreover, a portion of the insulating member 100 at the large surface region 112 is prevented from occupying excessive space in the mounting cavity 2111, thereby helping to increase the energy density of the battery cell 20.

In one embodiment, H₅ may be, but is not limited to, 0.04 mm, 0.005 mm, 0.01 mm, 0.015 mm, 0.02 mm, 0.025 mm, 0.03 mm, 0.01Ei, 0.02E₁, 0.03Ei, 0.04E₁, 0.05E₁, 0.06E₁, 0.07Ei, 0.08E₁, 0.09E₁, or 0.1E₁.

In another embodiment of this application, in the provided battery cell 20, when the large surface region 112 is not under pressure, the thickness of the insulating member 100 at the large surface region 112 is H₄, and 0.04 mm≤H₄≤0.2H₃; and when the large surface region 112 is under pressure, the thickness of the insulating member 100 at the large surface region 112 is H₅, and 0.004 mm≤H₅≤0.1H₃.

In the battery cell 20 of this embodiment of this application, by defining these two relationships, the large surface region 112 provides a good insulation effect, reducing the risk of short circuits, also reducing manufacturing costs of the insulating member 100, and reducing the space occupied by the insulator 110 in the mounting cavity 2111, thereby helping to increase the energy density of the battery cell 20.

In another embodiment of this application, as shown in FIG. 4 and FIG. 5, the insulator 110 of the provided battery cell 20 includes a bottom surface region 113, two large surface regions 112, and two side surface regions 111. Both ends of the body portion 232 are connected to the bent portions 231. The body portion 232 includes large surfaces 2321 respectively connected to two opposite sides of the surfaces of the bent portions 231 facing away from the body portion 232. The two large surface regions 112 respectively cover the two large surfaces 2321. The bottom surface region 113 covers a surface of the body portion 232 facing away from a tab 233 of the electrode assembly 23 and a surface of the bent portion 231 facing away from the tab 233 of the electrode assembly 23.

The two large surfaces 2321, for example, as shown in FIG. 4, may refer to a front side surface and a rear side surface of the body portion 232. The two large surface regions 112 cover the two large surfaces 2321, respectively, the body portion 232 is located between the two large surface regions 112, and the two large surface regions 112 are respectively located between the two large surfaces 2321 and the housing 21 to achieve insulation between the large surfaces 2321 and the housing 21. As shown in FIG. 5, the two large surface regions 112 may refer to a front wall and a rear wall of the insulator 110.

The two bent portions 231, for example, as shown in FIG. 4, may refer to arc-shaped structures at left and right ends of the electrode assembly 23. The two side surface regions 111 cover the two bent portions 231, respectively, the electrode assembly 23 is located between the two side surface regions 111, and the two side surface regions 111 are respectively located between the respective bent portions 231 and the housing 21 to achieve insulation between the bent portions 231 and the housing 21. As shown in FIG. 5, the two side surface regions 111 may refer to a left wall and a right wall of the insulator 110.

One side of the body portion 232 typically has a tab 233 extending outward from the body portion 232, and the tab 233 is configured to be electrically connected to an electrode terminal 24 of the end cover 212 for outputting or inputting electrical energy of the battery cell 20. As shown in FIG. 4, the tab 233 extends upward from a top surface 2302 of the body portion 232. The bottom surface region 113 may refer to a portion of the insulator 110 covering the surface of the electrode assembly 23 facing away from the tab 233. The surface of the body portion 232 facing away from the tab 233 of the electrode assembly 23 and the surface of the bent portion 231 facing away from the tab 233 jointly form the surface of the electrode assembly 23 facing away from the tab 233, that is, the bottom surface 2301 of the electrode assembly 23. The bottom surface region 113 is located between the bottom surface 2301 of the electrode assembly 23 and the housing 21 to achieve insulation between the bottom surface 2301 of the electrode assembly 23 and the housing 21. The bottom surface region 113 may refer to a bottom wall of the insulator 110.

In the battery cell 20 of this embodiment of this application, the arrangement of the bottom surface region 113, the two large surface regions 112, and the two side surface regions 111 can insulate most regions of the electrode assembly 23 from the housing 21, reducing the risk of short circuits and improving the use reliability of the battery cell 20.

In another embodiment of this application, as shown in FIG. 4 to FIG. 9, a length of the bottom surface region 113 of the provided battery cell 20 is L₁, a width of the electrode assembly 23 is E₂, a thickness of the side surface region 111 is H₇, a thickness of the first buffer body 120 is H₆, and E₂≤L₁≤1.05*(E₂+2H₇+2H₆).

The length L₁ of the bottom surface region 113, for example, as shown in FIG. 5, may refer to a dimension of the bottom surface region 113 parallel to the width direction (referring to the direction Y in FIG. 5) of the body portion 232. For example, as shown in FIG. 5, the length L₁ of the bottom surface region 113 may alternatively refer to a spacing between two surfaces of the two side surface regions 111 facing away from each other. For example, as shown in FIG. 7, the length L₁ of the bottom surface region 113 may alternatively refer to a dimension of the bottom surface region 113 along a direction Y1.

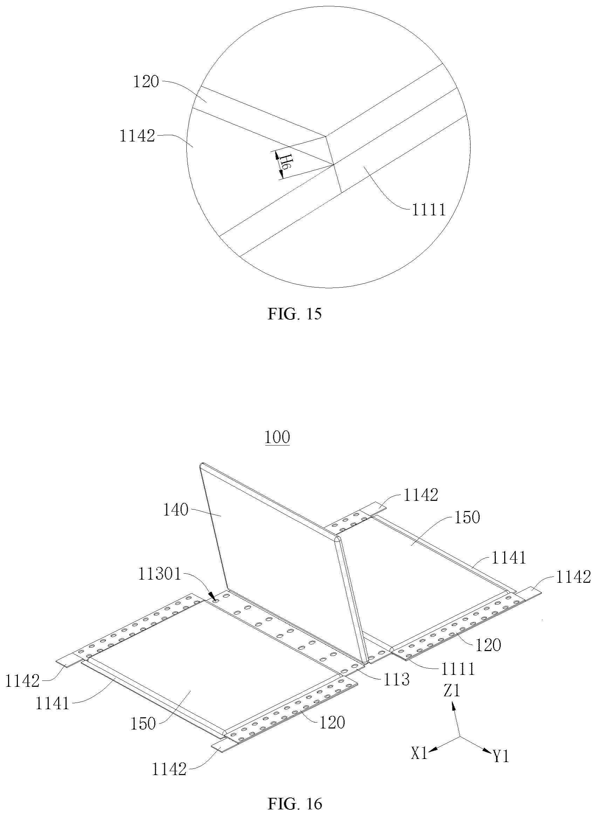

For example, as shown in FIG. 14 and FIG.15, if the first buffer body 120 is a planar buffer body, the thickness at the thinnest part of the first buffer body 120 is equal to the thickness at the thickest part of the first buffer body 120, and the thickness H₆ of the first buffer body 120 is equal to the thickness at the thinnest part of the first buffer body 120 or the thickness at the thickest part of the first buffer body 120. For example, as shown in FIG. 9, if the first buffer body 120 is provided with a receiving groove 122, the thickness H₆ of the first buffer body 120 is equal to the thickness H₁ at the thinnest part of the first buffer body 120.

As shown in FIG. 3, FIG. 4, or FIG. 5, from L₁≥E₂, it can be learned that there is a certain space between the two side surface regions 111 to accommodate the electrode assembly 23, and this space can be designed to be sufficiently large, reducing the risk of overpressure on the electrode assembly 23.

As shown in FIG. 3, FIG. 4, or FIG. 5, a value of E₂+2H₇+2H₆ may refer to a sum of the dimensions of the electrode assembly 23, the two first buffer bodies 120, and the two side surface regions 111 in the width direction (referring to a direction X in FIG. 12) of the body portion 232. From L₁≤1.05(E₂+2H₇+2H₆), it can be learned that L₁-2.1H₇≤1.05(E₂+2H₆), meaning the spacing between the two side surface regions 111 can be designed to be slightly larger than 1.05 times the sum of the width E₂ of the electrode assembly 23 and the thicknesses H₆ of the two first buffer bodies 120.

In the battery cell 20 of this embodiment of this application, through the design of E₂≤L₁≤1.05*(E₂+2H₇+2H₆), there is a certain space between the two side surface regions 111 to accommodate the electrode assembly 23, and the pressure exerted by the two side surface regions 111 on the electrode assembly 23 is small, reducing the risk of overpressure on the electrode assembly 23. The spacing between the two side surface regions 111 can be designed to be slightly larger than 1.05 times the sum of the width E₂ of the electrode assembly 23 and the thicknesses H₆ of the two first buffer bodies 120, allowing the two side surface regions 111 and the two first buffer bodies 120 to support the two bent portions 231, thereby enabling the electrode assembly 23 to be stably wrapped within the insulating member 100. Additionally, the first buffer body 120 has sufficient mounting space, reducing the risk of overpressure on the first buffer body 120, thereby allowing the first buffer body 120 to effectively mitigate the swelling of the bent portion 231.

In another embodiment of this application, as shown in FIG. 12 and FIG. 13, the number of the electrode assemblies 23 within the insulator 110 of the provided battery cell 20 is N₂, the thickness of the body portion 232 is H₃, the width of the bottom surface region 113 is E₃, the thickness of the large surface region 112 is H₈, and N₂*H₃≤E₃≤1.05N₂*(H₃+2H₈).

As shown in FIG. 12 and FIG. 13, the width of the bottom surface region 113 may refer to a dimension of the bottom surface region 113 in the thickness direction (referring to the direction X in FIG. 12) of the body portion 232. The width of the bottom surface region 113 may alternatively refer to the spacing between the surfaces of the two large surface regions 112 facing away from each other. For example, as shown in FIG. 7, the width of the bottom surface region 113 refers to a dimension of the bottom surface region 113 in a direction X1.

A value of N₂*H₃ may refer to the sum of the thicknesses H₃ of all the body portions 232, where the number of the electrode assemblies 23 may be one, two, three, four, or more, which is specifically selected based on actual needs and is not limited herein.

From E₃≥N₂*H₃, it can be learned that there is a certain space between the two large surface regions 112 to accommodate all the electrode assemblies 23, and this space can be designed to be sufficiently large, reducing the risk of overpressure on the electrode assemblies 23.

From E₃≤1.05N₂*(H₃+2H₈), it can be learned that E₃-2.1N₂*H₈≤1.05N₂*H₃, meaning the spacing between the two large surface regions 112 can be designed to be slightly larger than the sum of the thicknesses H₃ of all the body portions 232.

In the battery cell 20 of this embodiment of this application, through the design of E₂≤L₁≤1.05*(E₂+2H₇+2H₆), there is a certain space between the two large surface regions 112 to accommodate all the electrode assemblies 23, and this space can be designed to be sufficiently large, reducing the risk of overpressure on the electrode assemblies 23. Additionally, the spacing between the two large surface regions 112 can be designed to be slightly larger than the sum of the thicknesses H₃ of all the body portions 232, allowing the large surface regions 112 to support the electrode assemblies 23, thereby enabling the electrode assemblies 23 to be stably wrapped within the insulating member 100. Furthermore, a certain mounting space can be provided for the third buffer body 150, mitigating the swelling of the large surfaces 2321, and improving the cycling performance of the battery 1100.

In another embodiment of this application, as shown in FIG. 3 to FIG. 7, the housing 21 of the provided battery cell 20 includes a shell 211 and an end cover 212, where the end cover 212 covers the shell 211, and the end cover 212 and the shell 211 jointly enclose the mounting cavity 2111. The number of the electrode assemblies 23 within the insulator 110 is N₂, the insulator 110 further includes a first top surface portion 1141, the first top surface region 114 is connected to the end cover 212, the first top surface portion 1141 is located at a side portion of the large surface region 112 facing away from the bottom surface region 113, a width of the first top surface portion 1141 is E₄, the thickness of the body portion 232 is H₃, and 0.1N₂*H₃≤E₄≤0.5N₂*H₃.

The first top surface portion 1141 may refer to a portion of the insulator 110 configured to be connected to the end cover 212. For example, as shown in FIG. 5, the first top surface portion 1141 is located at a side portion of the large surface region 112 facing away from the bottom surface region 113, that is, a portion of a top wall of the insulator 110 adjacent to the large surface region 112. The first top surface portion 1141 and the end cover 212 may be connected by methods such as hot melting or adhesion, which may be specifically set based on actual needs and is not limited herein.

The width E₄ of the first top surface region 114, for example, as shown in FIG. 5, may refer to a dimension of the first top surface portion 1141 along the direction X, or may refer to a dimension of the first top surface portion 1141 in the thickness direction of the body portion 232 (referring to a direction X in FIG. 4).

N₂*H₃ may be understood as a sum of the thicknesses H₃ of all the electrode assemblies 23 wrapped within the insulating member 100.

In the battery cell 20 of this embodiment of this application, through the design of 0.1N₂H₃≤E₄≤0.5N₂H₃, a ratio of the width E₄ of the first top surface portion 1141 to the thicknesses H₃ of all the electrode assemblies 23 is greater than or equal to 0.1, so that the first top surface portion 1141 has a certain area in connection with the end cover 212, allowing the end cover 212 and the first top surface portion 1141 to be firmly connected, and enabling the insulating member 100 to be stably fixed within the housing 21, thereby improving the cycling stability and use reliability of the battery cell 20. In addition, the width E₄ of the first top surface portion 1141 is less than or equal to half the thicknesses H₃ of all the electrode assemblies 2, so that, as shown in FIG. 12 and FIG. 13, two first top surface portions 1141 located on two opposite sides of the electrode assembly 23 do not overlap when covering the electrode assembly 23, reducing redundancy and also reducing the risk of shielding the tab.

In another embodiment of this application, as shown in FIG. 3 to FIG. 7, in the provided battery cell 20, 0.1N₂*H₃≤E₄≤0.25N₂*H₃.

In the battery cell 20 of this embodiment of this application, through the design of 0.1N₂*H₃≤E₄≤0.5N₂*H₃, the end cover 212 and the first top surface portion 1141 are firmly connected, enabling the insulating member 100 to be stably fixed within the housing 21, thereby improving the cycling stability and use reliability of the battery cell 20. In addition, the width E₄ of the first top surface portion 1141 is less than or equal to a quarter of the total thickness H₃ of all the electrode assemblies 23, allowing the width of the first segment of top surface 2302 to be designed smaller, thereby reducing material usage and reducing costs.

In another embodiment of this application, as shown in FIG. 13, in the provided battery cell 20, at least one of the bottom surface region 113, the side surface region 111, and the large surface region 112 is covered with a functional layer 130 for improving the performance of the battery cell 20.

The functional layer 130 refers to a layer structure capable of improving the performance of the battery cell 20, for example, the functional layer 130 may refer to a layer structure with good thermal conduction performance, thermal insulation performance, insulating properties, buffering performance, and the like.

At least one of the bottom surface region 113, the side surface region 111, and the large surface region 112 is covered with the functional layer 130. It can be understood that any one of the bottom surface region 113, the side surface region 111, and the large surface region 112 is covered with the functional layer 130, any two of the bottom surface region 113, the side surface region 111, and the large surface region 112 are covered with the functional layer 130, or all the bottom surface region 113, the side surface region 111, and the large surface region 112 are covered with the functional layer 130.

In the battery cell 20 of this embodiment of this application, the functional layer 130 can improve the performance of the battery cell 20.

In another embodiment of this application, as shown in FIG. 13, the functional layer 130 of the provided battery cell 20 includes a thermally conductive layer 131, where the thermally conductive layer 131 covers the bottom surface region 113.

The thermally conductive layer 131 refers to a layer structure made of a material with good thermal conduction performance. To efficiently transfer heat of the battery cell 20 to the outside of the battery cell 20, a thermal conductivity coefficient of a thermally conductive layer 131 needs to be greater than a thermal conductivity coefficient of the insulator 110 and a thermal coefficient of the buffer body. For example, the thermally conductive layer 131 may be a thermally conductive silicone sheet.

In the battery cell 20 of this embodiment of this application, the thermally conductive layer 131 covering the bottom surface region 113 can improve heat dissipation at the bottom of the electrode assembly 23, reducing the risk of thermal runaway of the battery cell 20.

In another embodiment of this application, as shown in FIG. 13, the functional layer 130 of the provided battery cell 20 includes a thermally conductive layer 131, where the thermally conductive layer 131 covers the large surface region 112.

In the battery cell 20 of this embodiment of this application, when a plurality of battery cells 20 are grouped, the large surface regions 112 of two adjacent battery cells 20 are arranged opposite each other, so that the thermally conductive layer 131 can accelerate heat conduction between the two adjacent battery cells 20, reducing a temperature difference between the two adjacent battery cells 20, thereby helping to improve the temperature consistency of the grouped battery cells 20, facilitating system thermal management of the battery cells 20, and extending the service life of the battery cells 20.

In another embodiment of this application, as shown in FIG. 13, the functional layer 130 of the provided battery cell 20 includes a thermally conductive layer 131, where both the large surface region 112 and the bottom surface region 113 are covered with the thermally conductive layer 131.

In the battery cell 20 of this embodiment of this application, the thermally conductive layer 131 covering the bottom surface region 113 can enhance heat dissipation at the bottom of the electrode assembly 23, reducing the risk of thermal runaway, while the thermally conductive layer 131 covering the large surface region 112 can accelerate heat conduction between two adjacent battery cells 20 in the grouped battery cells 20, reducing a temperature difference between the two adjacent battery cells 20, thereby improving temperature consistency of the grouped battery cells 20, facilitating system thermal management of the battery cells 20, and extending the service life of the battery cells 20.

In another embodiment of this application, as shown in FIG. 13, the functional layer 130 of the provided battery cell 20 further includes a thermal insulation layer 132, where the thermal insulation layer 132 covers the large surface 2321.

The thermal insulation layer 132 refers to a layer structure made of a thermal insulation material, such as an aerogel insulation material.

In the battery cell 20 of this embodiment of this application, the thermal insulation layer 132 covers the large surface 2321, the thermal insulation layer 132 can impede the outward transfer of heat generated by the electrode assembly 23, thereby helping to control the spread of heat after a single battery cell 20 undergoes thermal runaway, reducing the risk of thermal runaway in other battery cells 20 caused by the thermal runaway of a single battery cell 20, and improving the use reliability of the grouped battery cells 20.

In another embodiment of this application, as shown in FIG. 12 to FIG. 20, the insulating member 100 of the provided battery cell 20 further includes a second buffer body 140, there are a plurality of electrode assemblies 23, the plurality of electrode assemblies 23 are stacked along the thickness direction (referring to the direction X in FIG. 12) of the body portion 232 to form an electrode module, the insulator 110 wraps the exterior of the electrode module, and the second buffer body 140 is disposed between two adjacent electrode assemblies 23.

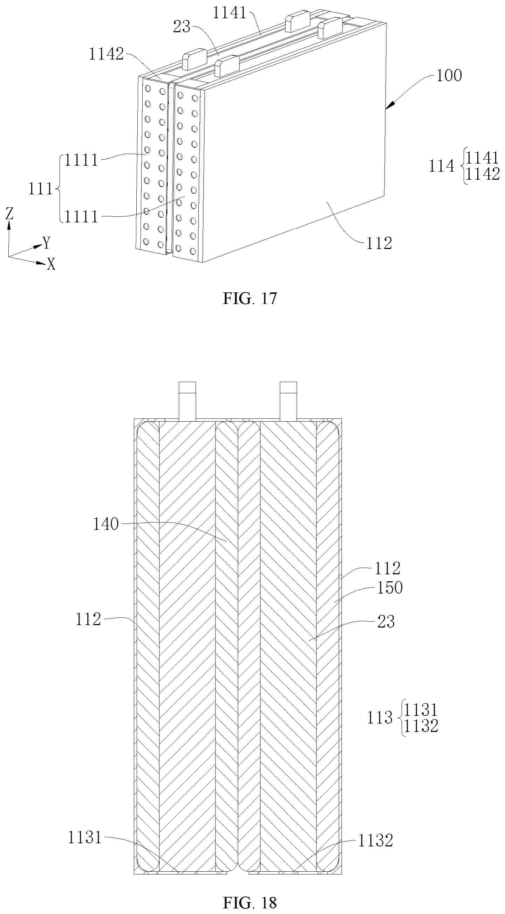

The electrode module refers to a component formed by stacking a plurality of electrode assemblies 23 along the thickness direction (referring to the direction X in FIG. 12) of the body portion 232. Typically, one battery cell 20 may be provided with a plurality of electrode assemblies 23 inside to increase the power of the battery cell 20. One electrode module may be provided with two, three, four, or more electrode assemblies 23 inside, and a specific number is set based on actual power and is not limited herein. For example, one electrode module is provided with two electrode assemblies 23 inside, which are stacked along the thickness direction (referring to a direction X in FIG. 17) of the body portion 232. Alternatively, one electrode module is provided with four electrode assemblies 23 inside, which are stacked along the thickness direction (referring to the direction X in FIG. 12) of the body portion 232. Additionally, one battery cell 20 may be provided with one, two, three, or more electrode modules inside, and a specific number is set based on actual power and is not limited herein.

The insulator 110 wraps the exterior of the electrode module. It can be understood that the insulator 110 wraps the exterior of the electrode module, and the insulator 110 can insulate and separate the electrode module from the housing 21, reducing the risk of short circuits.

The second buffer body 140 is disposed between two adjacent electrode assemblies 23. It can be understood that the second buffer body 140 is located between two adjacent electrode assemblies 23, the electrode assemblies 23 are stacked along the thickness direction (referring to a direction X in FIG. 15), and the second buffer body 140 is located between the large surfaces 2321 of two adjacent electrode assemblies 23.

In the battery cell 20 of this embodiment of this application, the second buffer body 140 is disposed between two adjacent electrode assemblies 23, and the large surfaces 2321 of the two adjacent electrode assemblies 23 swell and compress the second buffer body 140 from two opposite sides of the second buffer body 140, causing deformation, so that the second buffer body 140 can mitigate the swelling of the two adjacent electrode assemblies 23, reducing the risk of lithium precipitation in the electrode assemblies 23.

In another embodiment of this application, as shown in FIG. 12 to FIG. 16, at least one edge portion of the second buffer body 140 of the provided battery cell 20 is connected to the insulator 110.

At least one edge portion of the second buffer body 140 is connected to the insulator 110. It can be understood that one, two, three, four, or more edge portions of the second buffer body 140 may be connected to the insulator 110, which may be set based on actual needs and is not limited herein.

In the battery cell 20 of this embodiment of this application, the edge portion of the second buffer body 140 is connected to the insulator 110, so that the insulating member 100 is simple in structure and easy to process and manufacture.

In another embodiment of this application, as shown in FIG. 12 to FIG. 15, a plurality of second buffer bodies 140 are disposed between two adjacent electrode assemblies 23 of the provided battery cell 20, and the plurality of second buffer bodies 140 are stacked along the thickness direction (referring to the direction X in FIG. 12) of the body portion 232.

A plurality of second buffer bodies 140 are disposed between two adjacent electrode assemblies 23. It can be understood that two, three, four, or more second buffer bodies 140 are disposed between two adjacent electrode assemblies 23, and a specific number may be set based on the actual usage requirements of the battery cell 20 and is not limited herein. The plurality of second buffer bodies 140 are stacked along the thickness direction of the body portion 232, meaning a stacking direction of the electrode assemblies 23 is the same as a stacking direction of the second buffer bodies 140, so that the two adjacent electrode assemblies 23 respectively compress the second buffer bodies 140 at two ends and compress the second buffer bodies 140 at the two ends to the second buffer body 140 in the middle, enabling the two adjacent electrode assemblies 23 to be buffered by the plurality of second buffer bodies 140.

In the battery cell 20 of this embodiment of this application, the plurality of second buffer bodies 140 are stacked along the thickness direction of the body portion 232, so that the swelling of two adjacent electrode assemblies 23 can be buffered by the plurality of second buffer bodies 140, providing a better effect in mitigating the swelling of the electrode assemblies 23, thereby helping to reduce the risk of lithium precipitation in the electrode assemblies 23.

In another embodiment of this application, as shown in FIG. 17 to FIG. 19, the second buffer bodies 140 of the provided battery cell 20 are sequentially connected, and the plurality of stacked second buffer bodies 140 can be unfolded. The insulator 110 includes a first insulating portion 1131 and a second insulating portion 1132, where the first insulating portion 1131 and the second insulating portion 1132 respectively cover two adjacent electrode assemblies 23. When the plurality of second buffer bodies 140 are in an unfolded state, the first second buffer body 140 is connected to the first insulating portion 1131, the last second buffer body 140 is connected to the second insulating portion 1132, and the first insulating portion 1131 and the second insulating portion 1132 can leave away from each other as the second buffer bodies 140 are unfolded.

The second buffer bodies 140 are sequentially connected, and the plurality of stacked second buffer bodies 140 can be unfolded. It can be understood that two adjacent second buffer bodies 140 leave away from each other, so that the plurality of stacked second buffer bodies 140 can be unfolded; two adjacent second buffer bodies 140move close to each other, so that the plurality of second buffer bodies 140 can be stacked together for insertion between two adjacent electrode assemblies 23. The stacking arrangement of the second buffer bodies 140 can reduce the space occupied by the plurality of second buffer bodies 140 within the battery cell 20, improving volume utilization. Two adjacent second buffer bodies 140 may be connected by an elastic member, and with the bending of the elastic member, the plurality of second buffer bodies 140 can be unfolded and stacked, where the elastic member may be a rubber member or a silicone member. Alternatively, a crease may be provided between two adjacent second buffer bodies 140, and the crease enables relative unfolding and stacking of the two adjacent second buffer bodies 140. Alternatively, the plurality of second buffer bodies 140 may be made of a single piece of soft buffering material, and the flexible bending properties of the soft buffering material enables stacking and unfolding of the plurality of second buffer bodies 140. Certainly, other connection methods may also be used in other embodiments, which are not limited herein.

The first insulating portion 1131 refers to a part of the insulator 110 covering one of the two adjacent electrode assemblies 23, and the second insulating portion 1132 refers to a part of the insulator 110 covering the other one of the two adjacent electrode assemblies 23. The first insulating portion 1131 and the second insulating portion 1132 are connected to the second buffer bodies 140 at two ends, respectively, and the first insulating portion 1131 and the second insulating portion 1132 can leave away from each other as the second buffer bodies 140 are unfolded, allowing the plurality of stacked second buffer bodies 140 to be unfolded smoothly, thereby facilitating accommodation and storage of the insulating member 100. For example, the first insulating portion 1131 and the second insulating portion 1132 are disconnected to reduce interference and facilitate unfolding of the plurality of second buffer bodies 140. Certainly, the first insulating portion 1131 and the second insulating portion 1132 may alternatively be connected by an elastic member, and the elastic member can be stretched to allow the first insulating portion 1131 and the second insulating portion 1132 to leave away from each other. In addition, an elastic recovery force of the elastic member can be used to allow the first insulating portion 1131 and the second insulating portion 1132 to automatically move close to each other, enabling automatic stacking of the plurality of second buffer bodies 140. The elastic member may be a rubber member or a silicone member.

In the battery cell 20 of this embodiment of this application, the plurality of stacked second buffer bodies 140 can be unfolded, facilitating accommodation and storage of the insulating member 100.

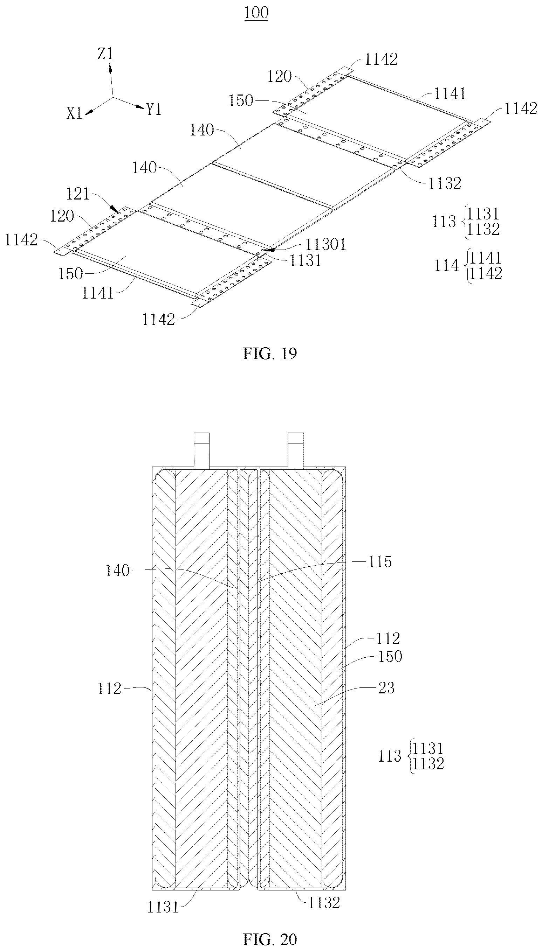

In another embodiment of this application, as shown in FIG. 20, the insulator 110 of the provided battery cell 20 includes a plurality of third insulating portions 115 located between two adjacent electrode assemblies 23, the plurality of third insulating portions 115 are stacked along the thickness direction of the body portion 232, and the third insulating portions 115 are sequentially connected, so that the plurality of stacked third insulating portions 115 are unfolded. At least one third insulating portion 115 is connected to the second buffer body 140.

The third insulating portion 115 refers to one layer in a stacked structure of the insulating member 100 located between two adjacent electrode assemblies 23 and stacked along the thickness direction of the body portion 232. The third insulating portions 115 are sequentially connected, and two adjacent third insulating portions 115 can leave away from each other, so that the plurality of stacked third insulating portions 115 are unfolded, facilitating unfolding, storage, and accommodation of the insulating member 100. Two adjacent third insulating portions 115 can move close to each other, so that the plurality of third insulating portions 115 are stacked for insertion between two adjacent electrode assemblies 23, reducing the space occupied by the plurality of third insulating portions 115 within the battery cell 20 and improving volume utilization. For example, the insulator 110 is made of a soft insulating material, and the flexible bending properties of the soft insulating material enables stacking and unfolding of the plurality of third insulating portions 115. Thus, there is no need to provide other connection structures, so the insulator 110 is simple in structure and convenient to process and manufacture. Alternatively, two adjacent third insulating portions 115 are connected by an elastic member, and with the bending of the elastic member, the plurality of third insulating portions 115 are unfolded and stacked, where the elastic member may be a rubber member or a silicone member. Alternatively, a crease may be provided between adjacent third insulating portions 115, so that the crease enables relative rotation between two adjacent buffer bodies. Certainly, other connection methods may also be used in other embodiments, which are not limited herein.

There are a plurality of third insulating portions 115. It can be understood that, there may be two, three, four, or more third insulating portions 115, and a specific number may be set based on actual design needs and is not limited herein.

At least one third insulating portion 115 is connected to the second buffer body 140. It can be understood that when the plurality of stacked third insulating portions 115 are located between two adjacent electrode assemblies 23, the second buffer body 140 connected to the third insulating portions 115 is located between the two adjacent electrode assemblies 23 to mitigate the swelling force of the two adjacent electrode assemblies 23, reducing the risk of lithium precipitation in the electrode assemblies 23. During the unfolding of the plurality of third insulating portions 115, the second buffer body 140 connected to the third insulating portions 115 is flattened accordingly, facilitating storage of the insulating member 100. There is at least one third insulating portion 115. It can be understood that one, two, or three third insulating portions 115 may be connected to the second buffer body 140, which may be specifically set based on actual design needs. For example, two opposite side surfaces of the third insulating portion 115 are both connected to the second buffer body 140, and a larger number of the second buffer bodies 140 improves the effect of the second buffer bodies 140 in mitigating the swelling of the electrode assemblies 23. Alternatively, one side surface of the third buffer body 150 may be connected to the second buffer body 140 in other embodiments, which may be specifically designed based on actual needs and is not limited herein.

In the battery cell 20 of this embodiment of this application, the third insulating portion 115 is disposed between two adjacent electrode assemblies 23, and the third insulating portion 115 can insulate the two adjacent electrode assemblies 23, reducing the risk of short circuits. The unfolding of the plurality of stacked third insulating portions 115 drives the second buffer body 140 connected to the third insulating portions 115 to be flattened accordingly, achieving the unfolding of the insulating member 100, facilitating the storage of the insulating member 100.

In another embodiment of this application, as shown in FIG. 6, when the provided battery cell 20 is subjected to a pressure P along the thickness direction of the first buffer body 120, a thickness deformation amount of the first buffer body 120 is a, a thickness of the first buffer body 120 before the pressure is applied is b, and c=a/b, where when 0.001 MPa≤P≤0.05 MPa,0.5%≤c≤60%; and when P≥1.2 MPa, c≥80%.

The thickness deformation amount a of the first buffer body 120 refers to a difference between the thickness b of the first buffer body 120 before the pressure is applied and a thickness of the first buffer body 120 after the pressure is applied; c refers to a ratio of the thickness deformation amount of the first buffer body 120 to the thickness of the first buffer body 120 before the pressure is applied; and in practical applications, c may represent the strain of the first buffer body 120 in the thickness direction of the first buffer body 120.

In the battery cell 20 of this embodiment of this application, by defining the relationship between the pressure applied to the first buffer body 120 and the deformation amount, the first buffer body 120 can match the swelling of the electrode assembly 23 throughout the lifecycle of the electrode assembly 23, effectively mitigating the swelling of the electrode assembly 23, improving lithium precipitation in the electrode assembly 23, and improving the cycling performance of the electrode assembly 23.

A pressure-strain curve of the first buffer body 120 may be obtained by, but is not limited to, the following method, specifically including the following steps.
1. Samples with dimensions of 50 mm*50 mm*(1 to 8) mm are tested, where two groups of samples are tested each time.
2. The two groups of samples are placed under a Gotech tensile machine and are fixed to a test table with a furrow tape.
3. A pressing module is installed on the Gotech tensile machine.
4. The Gotech tensile machine is powered on, and the pressing module is adjusted to a position which is 0.5 cm above the samples.
5. A pressure-strain curve test is started, with a compression speed of 2 mm/min; a pressure-deformation curve is recorded until a recorded pressure value reaches 8 MPa; and then a pressure-strain curve of the sample is obtained. A relationship between the pressure applied to the first buffer body 120 and the deformation amount of the first buffer body 120 can be obtained based on the pressure-strain curve.

It should be understood that the sequence numbers of the steps in the above embodiment do not imply the execution order, and the execution order of each process should be determined by its function and internal logic, without constituting any limitation on the implementation process of this embodiment of this application.

In another embodiment of this application, as shown in FIG. 6, the peel strength between the insulator 110 and the first buffer body 120 of the provided battery cell 20 is greater than or equal to 0.1 MPa.

The peel strength between the insulator 110 and the first buffer body 120 can be tested according to a test method provided in GB/T 2791-1995, where specific test steps thereof are not repeated herein.

In the battery cell 20 of this embodiment of this application, by setting the peel strength between the insulator 110 and the first buffer body 120 to be greater than or equal to 0.1 MPa, the first buffer body 120 and the insulator 110 are difficult to separate, reducing the risk of uneven pressure being applied to the electrode assembly 23 due to separation between the first buffer body 120 and the insulator 110 during use of the electrode assembly 23, thereby helping to improve the use reliability and cycling stability of the electrode assembly 23.

In another embodiment of this application, as shown in FIG. 6, the peel strength between the insulator 110 and the first buffer body 120 of the provided battery cell 20 is greater than or equal to 0.7 MPa.

In the battery cell 20 of this embodiment of this application, by setting the peel strength between the insulator 110 and the first buffer body 120 to be greater than or equal to 0.7 MPa, the connection reliability between the first buffer body 120 and the insulator 110 is improved, reducing the risk of uneven pressure being applied to the electrode assembly 23 due to separation between the first buffer body 120 and the insulator 110 during use of the electrode assembly 23, thereby helping to improve the use reliability and cycling stability of the electrode assembly 23.

In another embodiment of this application, as shown in FIG. 6, the connection force between the insulator 110 and the first buffer body 120 of the provided battery cell 20 is greater than or equal to 1 N/m.

The connection force between the insulator 110 and the first buffer body 120 can be tested according to a test method provided in GB/T 2790-1995, where specific test steps thereof are not repeated herein.

In the battery cell 20 of this embodiment of this application, by setting the connection force between the first buffer body 120 and the insulator 110 to be greater than or equal to 1 N/m, the first buffer body 120 and the insulator 110 can be reliably connected, reducing the risk of uneven pressure being applied to the electrode assembly 23 due to separation between the first buffer body 120 and the insulator 110 during use of the electrode assembly 23, thereby helping to improve the use reliability and cycling stability of the electrode assembly 23.

In another embodiment of this application, the connection force between the insulator 110 and the first buffer body 120 of the provided battery cell 20 is greater than or equal to 10 N/m.

In the battery cell 20 of this embodiment of this application, by setting the connection force between the first buffer body 120 and the insulator 110 to be greater than or equal to 10 N/m, the first buffer body 120 and the insulator 110 can be more reliably connected, reducing the risk of uneven pressure being applied to the electrode assembly 23 due to separation between the first buffer body 120 and the insulator 110 during use of the electrode assembly 23, thereby helping to improve the use reliability and cycling stability of the electrode assembly 23.

In another embodiment of this application, the first buffer body 120 and the insulator 110 of the provided battery cell 20 form an integrated structure.

In the battery cell 20 of this embodiment of this application, the first buffer body 120 and the insulator 110 are manufactured as an integrated structure using integration processes such as injection molding or extrusion, reducing manufacturing steps, and helping to reduce manufacturing costs. In addition, high connection strength is provided between the first buffer body 120 and the insulator 110, the first buffer body 120 can be stably located between the bent portion 231 and the housing 21, and the battery cell 20 has better cycling stability and reliability.

In another embodiment of this application, as shown in FIG. 9, the first buffer body 120 of the provided battery cell 20 is adhered to the insulator 110.

The first buffer body 120 is bonded to the insulator 110. It can be understood that the first buffer body 120 and the insulator 110 are connected using a binder, and the binder may be a binder such as glue capable of stably adhering the first buffer body 120 to the insulator 110. The binder may be specifically selected based on actual needs, which is not limited herein.

In the battery cell 20 of this embodiment of this application, the first buffer body 120 and the insulator 110 are connected by adhesion, allowing for a simple connection operation and simple manufacturing of the insulating member 100.

In another embodiment of this application, as shown in FIG. 9, the first buffer body 120 of the provided battery cell 20 is connected to the insulator 110 by hot pressing.

The first buffer body 120 is connected to the insulating member 100 by hot pressing, which may refer to a method in which the first buffer body 120 or the insulator 110 is molten and then connected by heating, or refer to a method in which the binder between the first buffer body 120 and the insulator 110 is molten by heating and then the first insulator 110 and the insulator 110 are connected. Alternatively, other hot-pressing connection methods may also be used in other embodiments, which may be set based on actual needs and are not limited herein.

In the battery cell 20 of this embodiment of this application, the first buffer body 120 and the insulator 110 are connected by hot pressing, which is a simple connection method, facilitating processing and manufacturing.

The following lists some embodiments to better illustrate this application.

In one embodiment, as shown in FIG. 3, the battery cell 20 includes an end cover 212, a housing 21, an electrode assembly 23, and an insulating member 100. The insulating member 100 wraps the exterior of the electrode assembly 23, and the electrode assembly 23 and the insulating member 100 are both installed in the mounting cavity 2111 of the housing 21. The end cover 212 covers an opening of the housing 21, to encapsulate the electrode assembly 23 and the insulating member 100 within the housing 21.

As shown in FIG. 4, the electrode assembly 23 is wound and formed into a sheet-like shape, and the insulating member 100, after wrapping the exterior of the electrode assembly 23, forms a cuboid box structure. A flat portion of the electrode assembly 23 is the body portion 232, arc-shaped structures at the left and right ends of the electrode assembly 23 are the bent portions 231, a front wall surface and a rear wall surface of the body portion 232 are the large surfaces 2321, a lower wall surface of the electrode assembly 23 is the bottom surface 2301, and an upper wall surface of the electrode assembly 23 is the top surface 2302. The insulator 110 is made of a single piece of soft insulating material, the insulator 110 is folded to wrap the exterior of the electrode assembly 23, and the insulator can be unfolded into a sheet-like shape.

As shown in FIG. 5, when the insulating member 100 wraps the exterior of the electrode assembly 23; a front wall and a rear wall of the insulator 110 are the large surface regions 112; a left wall and a right wall of the insulator 110 are the side surface regions 111; a lower wall of the insulator 110 is the bottom surface region 113; and an upper wall of the insulator 110 is the top surface region 114. The two large surface regions 112 cover the two large surfaces 2321, respectively. The two side surface regions 111 cover the surfaces of the two bent portions 231 facing away from the body portion 232, respectively. The bottom surface region 113 covers the bottom surface 2301 of the electrode assembly 23. In this way, the electrode assembly 23 is wrapped and insulated. The top surface region 114 forms an annular structure, covers the periphery of the top surface 2302, and is connected to the periphery of the lower surface of the end cover 212 by hot melting, enabling the insulating member 100 to be fixed.

As shown in FIG. 6, FIG. 7, and FIG. 8, after the insulating member 100 is unfolded, the two large surface regions 112 are connected to front and rear edge portions of the bottom surface region 113, respectively. In the two side surface regions 111, one side surface region 111 is connected to the right edge portion of the front large surface region 112, and the other side surface region 111 is connected to the left edge portion of the rear large surface region 112. The top surface region 114 includes a first top surface portion 1141 and a second top surface portion 1142. The front edge portion of the front side surface region 111 and the rear edge portion of the rear side surface region 111 are each connected to a second top surface portion 1142, and edge portions of the two large surface regions 112 facing away from the bottom surface region 113 are each connected to the first top surface portion 1141. The first buffer body 120 is provided with a receiving groove 122, the receiving groove 122 is an arc-shaped groove, and the bent portion 231 can be inserted into the arc-shaped groove to mitigate the swelling force of the bent portion 231. The bottom of the receiving groove 122 is provided with a plurality of first through holes 121 extending through the first buffer body 120 and the side surface region 111, and the plurality of first through holes 121 are spaced apart along a length direction of the receiving groove 122 (referring to a direction X1 in FIG. 7), so that the electrolyte can flow to the bent portion 231 through the first through holes 121, providing electrolyte replenishment for the bent portion 231, thereby improving the cycling performance of the battery cell 20. The bottom surface region 113 is provided with a plurality of second through holes 11301, and the plurality of second through holes 11301 are uniformly spaced apart, so that the electrolyte can flow to the bottom of the electrode assembly 23 through the second through holes 11301, providing electrolyte replenishment for the electrode assembly 23, thereby improving the cycling performance of the battery cell 20.

In another embodiment, as shown in FIG. 10 and FIG. 11, after the insulating member 100 is unfolded, the two large surface regions 112 and the two side surface regions 111 are alternately arranged from left to right. The bottom surface region 113 includes a first bottom surface portion 1133 and a second bottom surface portion 1134. Front edge portions of the two large surface regions 112 are each connected to the first bottom surface portion 1133, front edge portions of the two side surface regions 111 are each connected to the second bottom surface portion 1134; rear edge portions of the two side surface regions 111 are each connected to the second top surface portion 1142; and rear edge portions of the two large surface regions 112 are each connected to the first top surface portion 1141. After the insulating member 100 is folded, the first bottom surface region 113 and the second bottom surface region 114 can cover the bottom surface 2301 of the electrode assembly 23, achieving insulation of the bottom surface 2301 of the electrode assembly 23. The first top surface portion 1141 and the second top surface portion 1142 enclose an annular top surface region 114 which is connected to the end cover 212 by hot melting.

In another embodiment, as shown in FIG. 12 or FIG. 13, the insulating member 100 wraps the exterior of the electrode assembly 23. Four electrode assemblies 23 are provided, and the four electrode assemblies 23 are stacked along the thickness direction of the body portion 232. Two adjacent electrode assemblies 23 are each provided with a second buffer body 140 inside, and the surfaces of the two large surface regions 112 facing the electrode assemblies 23 are connected to a third buffer body 150. The second buffer body 140 and the third buffer body 150 can mitigate the swelling of the large surfaces 2321, helping to improve the cycling performance of the battery cell 20. A surface of the bottom surface region 113 facing away from the electrode assemblies 23 is covered with a thermally conductive layer 131, and the surfaces of the two large surface regions 112 facing away from the electrode assemblies 23 are each covered with a thermally conductive layer 131 or an insulating layer to improve the performance of the battery cell 20.

As shown in FIG. 14 and FIG. 15, after the insulating member 100 is unfolded, the two large surface regions 112 are connected to the front and rear edge portions of the bottom surface region 113, respectively. The side surface region 111 includes two side surface portions 1111. The two side surface portions 1111 of one side surface region 111 are respectively connected to the left edge portions of the two large surface regions 112, and the two side surface portions 1111 of the other side surface region 111 are respectively connected to the right edge portions of the two large surface regions 112. The front edge portions of the front side surface portions 1111 and the rear edge portions of the rear side surface portions 1111 are each connected to the second top surface portion 1142, and the edge portions of the two large surface regions 112 facing away from the bottom surface region 113 are each connected to the first top surface portion 1141. Each side surface portion 1111 is connected to the first buffer body 120, the insulating member 100 is provided with a plurality of first through holes 121 extending through the first buffer body 120 and the side surface portions 1111, and a plurality of first through holes are arranged in a matrix pattern.

When the insulating member 100 wraps the exterior of the electrode assembly 23 in a folded manner, the side surface portions 1111 on the same side are spliced to cover the bent portion 231 of the electrode assembly 23, achieving insulation between the bent portion 231 and the housing 21. The first top surface portion 1141 and the second top surface portion 1142 form an annular top surface region 114 to facilitate connection with the end cover 212.

The bottom surface region 113 is connected to three second buffer bodies 140, the three second buffer bodies 140 are spaced apart from front to rear, and the three second buffer bodies 140 and four electrode assemblies 23 are alternatively arranged, ensuring that the second buffer body 140 is disposed between every two adjacent electrode assemblies 23.

In another embodiment, as shown in FIG. 16, the bottom surface region 113 is provided with one second buffer body 140, and the insulating member 100 can wrap the exteriors of two electrode assemblies 23.

In another embodiment, as shown in FIG. 17 to FIG. 19, there are two electrode assemblies 23, two stacked second buffer bodies 140 are disposed between the two second electrode assemblies 23, and upper edge portions of the two second buffer bodies 140 are connected. The bottom surface region 113 includes a first insulating portion 1131 and a second insulating portion 1132 that are disconnected, where the first insulating portion 1131 is connected to the lower edge portion of the left second buffer body 140, and the second insulating portion 1132 is connected to the lower edge portion of the right second buffer body 140. After the insulating member 100 is unfolded, the first insulating portion 1131 and the second insulating portion 1132 leave away from each other, allowing the two second buffer bodies 140 to be unfolded into a sheet-like shape.

In another embodiment, as shown in FIG. 20, there are two electrode assemblies 23; the two stacked third insulating portions 115 are disposed between two second electrodes, and upper edge portions of the two third insulating portions 115 are connected. The bottom surface region 113 includes a first insulating portion 1131 and a second insulating portion 1132 that are disconnected, where the first insulating portion 1131 is connected to the lower edge portion of the left third insulating portion 115, and the second insulating portion 1132 is connected to the lower edge portion of the right third insulating portion 115. Both left and right sides of the two third insulating portions 115 are connected to the second buffer bodies 140. After the insulating member 100 is unfolded, the first insulating portion 1131 and the second insulating portion 1132 leave away from each other, allowing the two third insulating portions 115 to be unfolded into a sheet-like shape to drive the four second buffer bodies 140 to be unfolded into a sheet-like shape, thereby facilitating accommodation and storage of the insulating member 100.

Certainly, in other embodiments, the top surface region 114, bottom surface region 113, two large surface regions 112, and two side surface regions 111 may be arranged in other manners, as long as the insulating member 100 can form a box structure with a receiving cavity after folded, and specific manners are not limited herein. For example, the top surface region 114, bottom surface region 113, two large surface regions 112, and two side surface regions 111 may be arranged in a manner referring to an arrangement manner shown in a cuboid unfolding figure. The first top surface portion 1141, second top surface portion 1142, side surface portion 1111, first bottom surface portion 1133, and second bottom surface portion 1134 may form a rectangular shape, a trapezoidal shape, or a reversed m shape, as long as the insulating member 100 can wrap the corresponding regions of the electrode assembly 23 after folded, which is not limited herein. The first top surface portion 1141 may be provided with a groove for exposing a tab to facilitate subsequent electrical connection.

In another embodiment of this application, a battery 1100 is provided, including the battery cell 20 described above.

The battery 1100 of this embodiment of this application uses the above battery cell 20, where the battery cell 20 has high use reliability and long cycle life, which helps to extend the service life and improve the performance of the battery 1100.

The battery 1100 of this embodiment of this application may adopt the technical solutions of any one or a combination of the embodiments described above, and therefore has the beneficial effects brought by the technical solutions of the above embodiments, which are not repeated herein.

In another embodiment of this application, an electric apparatus is provided, including the battery 1100 described above.

The electric apparatus of this embodiment of this application uses the above battery 1100, where the battery 1100 has a long service life, which helps to improve the performance of the electric apparatus.

The electric apparatus of this embodiment of this application may adopt the technical solutions of any one or a combination of the embodiments described above, and therefore has the beneficial effects brought by the technical solutions of the above embodiments, which are not repeated herein.

The descriptions of the various embodiments above focus on the differences between these embodiments, and their similarities or identical aspects can refer to each other, which are not repeated herein for brevity.

The above descriptions are merely preferred embodiments of this application and are not intended to limit this application. Any modifications, equivalent replacements, improvements, and the like made within the spirit and principles of this application shall be included within the protection scope of this application.

## Claims

1. A battery cell, comprising a housing, an insulating member, and an electrode assembly, wherein:
the housing is provided with a mounting cavity, and the insulating member and the electrode assembly are both located in the mounting cavity;
the insulating member comprises an insulator and a first buffer body connected to each other, the insulator wraps an exterior of the electrode assembly; and
the electrode assembly comprises a body portion and a bent portion connected to an end portion of the body portion, and the first buffer body is located between the bent portion and the housing.

2. The battery cell according to claim 1, wherein the first buffer body is located between a surface of the bent portion facing away from the body portion and the housing.

3. The battery cell according to claim 1 or 2, wherein the insulator comprises a side surface region, and the side surface region covers a surface of the bent portion facing away from the body portion.

4. The battery cell according to claim 3, wherein at least one of a surface of the side surface region facing the bent portion and a surface of the side surface region facing away from the bent portion is connected to the first buffer body.

5. The battery cell according to claim 4, wherein the insulating member is provided with a first through hole extending through the side surface region and the first buffer body, and the first through hole is capable of allowing an electrolyte to pass through and flow to the bent portion.

6. The battery cell according to any one of claim 5, wherein the number of the first through holes is N₁, a cross-sectional area of the first through hole is S₁, a projection area of the first buffer body along a thickness direction of the first buffer body is S₂, and N₁*S₁≤0.1S₂.

7. The battery cell according to any one of claims 1 to 6, wherein the first buffer body is provided with a receiving groove for accommodating the bent portion, and a wall of the receiving groove is capable of being attached to a surface of the bent portion facing away from the body portion.

8. The battery cell according to claim 7, wherein when the first buffer body is not under pressure, a thickness at the thinnest part of the first buffer body is H₁, a width of the bent portion is E₁, and 0.05 mm≤H₁≤0.6E₁.

9. The battery cell according to claim 8, wherein 0.05 mm≤H₁≤0.3E₁.

10. The battery cell according to any one of claims 7 to 9, wherein when the first buffer body is under pressure, a thickness at the thinnest part of the first buffer body is H₂, a width of the bent portion is E₁, and 0.005 mm≤H₂≤0.2E₁.

11. The battery cell according to claim 10, wherein 0.005 mm≤H₂≤0.1E₁.

12. The battery cell according to any one of claims 1 to 11, wherein:
the body portion comprises a large surface connected to a surface of the bent portion facing away from the body portion, the insulator further comprises a large surface region, the large surface region covers the large surface, and a thickness of the body portion is H₃; and
when the large surface region is not under pressure, a thickness of the insulating member at the large surface region is H₄, and 0.04 mm≤H₄≤0.2H₃, and/or when the large surface region is under pressure, the thickness of the insulating member at the large surface region is H₅, and 0.004 mm≤H₅≤0.1H₃.

13. The battery cell according to any one of claims 1 to 12, wherein:
the insulator comprises a bottom surface region, two large surface regions, and two side surface regions;
both ends of the body portion are connected to the bent portions;
the body portion comprises large surfaces respectively connected to two opposite sides of surfaces of the bent portions facing away from the body portion;
the two large surface regions respectively cover the two large surfaces;
the two side surface regions respectively cover the surfaces of the two bent portions facing away from the body portion; and
the bottom surface region covers a surface of the body portion facing away from a tab of the electrode assembly and a surface of the bent portion facing away from the tab of the electrode assembly.

14. The battery cell according to claim 13, wherein a length of the bottom surface region is L₁, a width of the electrode assembly is E₂, a thickness of the first buffer body is H₆, a thickness of the side surface region is H₇, and E₂≤L₁≤1.05*(E₂+2H₇+2H₆).

15. The battery cell according to claim 13 or 14, wherein the number of the electrode assemblies within the insulator is N₂, a thickness of the body portion is H₃, a width of the bottom surface region is E₃, a thickness of the large surface region is H₈, and N₂*H₃≤E₃≤1.05N₂*(H₃+2H₈).

16. The battery cell according to any one of claims 13 to 15, wherein:
the housing comprises a shell and an end cover, the end cover covers the shell, and the end cover and the shell jointly enclose the mounting cavity; and
the number of the electrode assemblies within the insulator is N₂, the insulator further comprises a first top surface portion, the first top surface portion is connected to the end cover, the first top surface portion is located at a side portion of the large surface region facing away from the bottom surface region, a width of the first top surface portion is E₄, a thickness of the body portion is H₃, and 0.1N₂*H₃≤E₄≤0.5N₂*H₃.

17. The battery cell according to claim 16, wherein 0.1N₂*H₃≤E₄≤0.25N₂*H₃.

18. The battery cell according to any one of claims 13 to 17, wherein at least one of the bottom surface region, the side surface region, and the large surface region is covered with a functional layer for improving performance of the battery cell.

19. The battery cell according to claim 18, wherein:
the functional layer comprises a thermally conductive layer; and
the thermally conductive layer covers the bottom surface region, and/or the thermally conductive layer covers the large surface region.

20. The battery cell according to claim 18, wherein the functional layer further comprises a thermal insulation layer, and the thermal insulation layer covers the large surface layer.

21. The battery cell according to any one of claims 1 to 20, wherein the insulating member further comprises a second buffer body, there are a plurality of electrode assemblies, the plurality of electrode assemblies are stacked along a thickness direction of the body portion to form an electrode module, the insulator wraps an exterior of the electrode module, and the second buffer body is disposed between two adjacent electrode assemblies.

22. The battery cell according to claim 21, wherein at least one edge portion of the second buffer body is connected to the insulator.

23. The battery cell according to claim 21 or 22, wherein a plurality of second buffer bodies are disposed between two adjacent electrode assemblies, and the plurality of second buffer bodies are stacked along the thickness direction of the body portion.

24. The battery cell according to claim 23, wherein:
the second buffer bodies are sequentially connected in a manner that the plurality of stacked second buffer bodies are capable of being unfolded;
the insulator comprises a first insulating portion and a second insulating portion, and the first insulating portion and the second insulating portion respectively cover two adjacent electrode assemblies; and
when the plurality of second buffer bodies are in an unfolded state, a first second buffer body is connected to the first insulating portion, a last second buffer body is connected to the second insulating portion, and the first insulating portion and the second insulating portion are capable of leaving away from each other as the second buffer bodies are unfolded.

25. The battery cell according to any one of claims 21 to 23, wherein the insulator comprises a plurality of third insulating portions located between two adjacent electrode assemblies, the plurality of third insulating portions are stacked along the thickness direction of the body portion, the third insulating portions are sequentially connected in a manner that the plurality of stacked third insulating portions are capable of being unfolded, and at least one of the third insulating portions is connected to the second buffer body.

26. The battery cell according to any one of claims 1 to 25, wherein when there is a pressure P along a thickness direction of the first buffer body, a thickness deformation amount of the first buffer body is a, a thickness of the first buffer body before the pressure is applied is b, and c=a/b, when 0.001 MPa≤P≤0.05 MPa, 0.5%≤c≤60%, and when P≥1.2 MPa, c≥80%.

27. The battery cell according to any one of claims 1 to 26, wherein the first buffer body and the insulator form an integrated structure, or the first buffer body is bonded to the insulator, or the first buffer body is connected to the insulator by hot pressing.

28. A battery, comprising the battery cell according to any one of claims 1 to 27.

29. An electric apparatus, comprising the battery according to claim 28.
